(19)

**Europäisches Patentamt**

**European Patent Office**

**Office européen des brevets**

(11) **EP 2 899 782 A1**

(12) **EUROPEAN PATENT APPLICATION**
published in accordance with Art. 153(4) EPC

(43) Date of publication:
**29.07.2015 Bulletin 2015/31**

(21) Application number: **13838144.7**

(22) Date of filing: **18.09.2013**

(51) Int Cl.:
**H01M 4/38** (2006.01)          **H01M 4/36** (2006.01)
**H01M 4/48** (2010.01)          **H01M 4/587** (2010.01)

(86) International application number:
**PCT/JP2013/075193**

(87) International publication number:
**WO 2014/046144 (27.03.2014 Gazette 2014/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.09.2012  JP 2012206107**
                      **19.09.2012  JP 2012206108**
                      **19.03.2013  JP 2013057196**
                      **18.07.2013  JP 2013149597**

(71) Applicant: **Mitsubishi Chemical Corporation**
**Chiyoda-ku**
**Tokyo 100-8251 (JP)**

(72) Inventors:
  • **UEDA Akio**
    **Inashiki-gun**
    **Ibaraki 300-0332 (JP)**
  • **AKASAKA Satoshi**
    **Inashiki-gun**
    **Ibaraki 300-0332 (JP)**

  • **ISHIWATARI Nobuyuki**
    **Inashiki-gun**
    **Ibaraki 300-0332 (JP)**
  • **FUSE Tooru**
    **Inashiki-gun**
    **Ibaraki 300-0332 (JP)**
  • **KAMEDA Takashi**
    **Sakaide-shi**
    **Kagawa 762-8510 (JP)**
  • **ASAMI Harumi**
    **Yokohama-shi**
    **Kanagawa 227-8502 (JP)**
  • **KIMURA Takahide**
    **Yokohama-shi**
    **Kanagawa 227-8502 (JP)**
  • **YAMADA Shunsuke**
    **Inashiki-gun**
    **Ibaraki 300-0332 (JP)**

(74) Representative: **Vossius & Partner**
**Patentanwälte Rechtsanwälte mbB**
**Siebertstrasse 3**
**81675 München (DE)**

(54) **COMPOSITE GRAPHITE PARTICLES FOR NON-AQUEOUS SECONDARY CELL NEGATIVE ELECTRODE, NEGATIVE ELECTRODE FOR NON-AQUEOUS SECONDARY CELL, AND NON-AQUEOUS SECONDARY CELL**

(57)   An object of the invention is to provide composite graphite particles (C) for nonaqueous-secondary-battery negative electrode, wherein metallic particle (B) capable of alloying with Li are present in inner parts thereof in a large amount. The invention relates to a composite graphite particle (C) for nonaqueous-secondary-battery negative electrode, the composite graphite particle (C) comprising a graphite (A) and a metallic particle (B) capable of alloying with Li, wherein when a section of the composite graphite particle (C) is examined with a scanning electron microscope, a folded structure of the graphite (A) is observed and a presence ratio of the metallic particle (B) in the composite graphite particle (C), as calculated by a specific measuring method, is 0.2 or higher.

EP 2 899 782 A1

[Fig. 1]

**Description**

Technical Field

The present invention relates to a composite graphite particle for nonaqueous-secondary-battery negative electrode, and to an active material for nonaqueous-secondary-battery negative electrode which includes the composite graphite particle, a negative electrode for nonaqueous secondary battery, and a nonaqueous secondary battery comprising the negative electrode.

Background Art

In recent years, the demand for high-capacity secondary batteries is growing with the trend toward size reductions in electronic appliances.

Nonaqueous secondary batteries, in particular, lithium ion secondary batteries, which have a higher energy density and better quick charge/discharge characteristics, as compared with nickel-cadmium batteries and nickel-hydrogen batteries, are especially receiving attention.

Lithium ion secondary batteries including a positive electrode and a negative electrode each capable of occluding and releasing lithium ions and further including a nonaqueous electrolytic solution containing a lithium salt, e.g., $LiPF_6$ or $LiBF_4$, dissolved therein were developed and are in practical use.

Various negative-electrode materials for these batteries have been proposed. However, graphitic carbon materials such as natural graphites, artificial graphites obtained by graphitizing coke or the like, graphitized mesophase pitch, and graphitized carbon fibers are being used even at present from the standpoints of high capacity, flatness of discharge potential, etc.

Meanwhile, nonaqueous secondary batteries, in particular, lithium ion secondary batteries, have recently come to be used in a wider range of applications. Such secondary batteries for use not only in conventional applications including notebook type personal computers, mobile communication appliances, portable cameras, portable game machines, and the like but also in power tools, electric vehicles, and the like are required to have higher quick charge/discharge characteristics than before. There is a desire for a lithium ion secondary battery which meets such requirement and combines high capacity and high cycling characteristics.

Although high capacity is desired as stated above, it is impossible, in the case of negative electrodes mainly based on carbon, to expect a capacity higher than 372 mAh/g, because the theoretical capacity of carbon is that value. Under these circumstances, application of various materials having a high theoretical capacity, in particular, metallic particles, to a negative electrode has been investigated.

For example, patent documents 1 and 2 propose processes in which a mixture of a fine powder of an Si compound, a graphite, a pitch as a precursor for a carbonaceous substance, etc. is burned to produce Si-composited graphite particles.

Patent document 3 proposes Si-composited graphite particles which include a rounded natural graphite and in which fine Si particles have been composited by a carbonaceous substance so as to localize on the surface of the spherical natural-graphite.

Patent document 4 proposes Si-composited graphite particles which include, as major components, a metal capable of alloying with Li, a flake graphite, and a carbonaceous substance and in which the metal is held between a plurality of particles of the flake graphite.

Patent document 5 proposes Si-composited graphite particles that include granules obtained by pulverizing a mixture of a raw graphite and a metal powder in a high-speed air stream and granulating the pulverized mixture, wherein the graphite used as a raw material has been partly pulverized, the raw graphite and the powder thereof formed by pulverization have agglomerated and stacked, and the metal powder is present in the state of having been dispersed on the surface of and within the granules.

Furthermore, patent document 6 discloses Si-composited graphite particles which are obtained by granulating and rounding a mixture of a natural crystalline or flake graphite, fine particles of an Si compound, carbon black, and a pore-forming agent selected from poly(vinyl alcohol), polyethylene glycol, polycarbosilanes, poly(acrylic acid), cellulosic polymers, and the like, impregnating or coating the granules with a mixture containing either a carbon precursor or carbon black, and burning the impregnated or coated granules, and which are configured of substantially spherical particles that have fine projections of carbon on the surface thereof.

Prior Art Documents

Patent Documents

Patent Document 1: JP-A-2003-223892
Patent Document 2: JP-A-2012-043546
Patent Document 3: JP-A-2012-124116
Patent Document 4: JP-A-2005-243508
Patent Document 5: JP-A-2008-27897
Patent Document 6: JP-A-2008-186732

Summary of the Invention

Problems that the Invention is to Solve

However, investigations made by the present inventors revealed that the technique described in patent document 1 has the following drawback. In the Si-composited graphite particles obtained by compositing a graphite with Si compound particles by means of a carbonaceous substance, the carbonaceous substance, which plays the role of binding in the Si-composited graphite particles, has poor binding properties. The Si-composited graphite particles hence disintegrate due to the volume expansion of the Si-composited graphite particles which accompanies charge/discharge, posing various problems including a deterioration in cycling characteristics due to conduction path breakage. Because of this, the Si-composited graphite particles have not reached a practicable level.

The technique described in patent document 2 has the following drawback. With respect to the Si-composited graphite particles including Si compound particles, flake graphite particles, and a carbonaceous substance derived from a coal tar pitch, the document proposes a structure in which the surface of the Si compound particles and flake graphite particles that have been burned is covered with amorphous carbon (specified by a Raman R value range), the structure being obtained by sufficiently stirring and mixing the ingredients before the compositing (burning). However, since the compositing results in insufficient binding properties, the Si-composited graphite particles disintegrate due to the volume expansion of the Si-composited graphite particles which accompanies charge/discharge, posing various problems including a deterioration in cycling characteristics due to conduction path breakage. The Si-composited graphite particles hence have not reached a practicable level.

The technique described in patent document 3 has the following drawback. In the Si-composited graphite particles which include a rounded natural graphite and in which fine Si compound particles have been composited by a carbonaceous substance so as to localize on the surface of the spherical natural-graphite, the Si compound particles show insufficient adhesion because the Si compound particles were merely attached to the graphite surface with the carbonaceous substance. Consequently, the Si compound particles shed from the graphite surface because of the volume expansion of the Si compound particles which accompanies charge/discharge, posing various problems including a deterioration in cycling characteristics due to conduction path breakage. The Si-composited graphite particles hence have not reached a practicable level.

The techniques described in patent documents 4 and 5 have the following drawback. The composite particles are granules which each are configured of a plurality of agglomerates formed by partly pulverizing a raw-material graphite in a high-speed air stream and agglomerating and stacking the pulverized raw material and in which fine metallic particles are present in the state of having been dispersed on the surface of and within the granules. Because of this, the binding between the agglomerates is weak. The Si-composited graphite particles hence disintegrate due to the volume expansion of the Si compound particles which accompanies charge/discharge, posing various problems including a deterioration in cycling characteristics due to conduction path breakage. Because of this, the Si-composited graphite particles have not reached a practicable level.

In addition, the Si-composited graphite particles according to these techniques are low also in the efficiency of incorporating metallic particles thereinto, and there has been room for improvement.

The technique described in patent document 6 undoubtedly involves a rounding treatment given to a natural crystalline graphite. However, as shown by Fig. 9 given in the document, it is not observed that the natural graphite has a folded structure. In addition, there is no suggestion therein to the effect that a polymer containing nitrogen atoms is incorporated. Furthermore, an investigation made by the present inventors revealed that the composite graphite particles produced by the method described in the document not only have the problems described above but also have a problem in that the amount of metallic particles present within the composite particles is so small that the composite particles do not satisfy the battery characteristics which the present inventors desire to attain. Moreover, the Si-composited graphite particles are low in the efficiency of incorporating metallic particles thereinto, and there has been room for improvement.

Accordingly, an object of the invention is to provide a composite graphite particle for nonaqueous-secondary-battery negative electrode, the composite graphite particle being free from the problems of the prior-art techniques and containing, in inner parts thereof, a large amount of metallic particles capable of alloying with Li.

Another object is to provide a composite graphite particle for nonaqueous-secondary-battery negative electrode, the composite graphite particle being useful for producing a nonaqueous secondary battery in which the shedding of metallic particle capable of alloying with Li from the graphite, which has inevitably occurred as a result of volume expansion due to charge/discharge, and conduction path breakage that accompanies the shedding are inhibited by the use of the composite graphite particle of the invention and in which the composite graphite particle is inhibited from undergoing side reactions with the electrolytic solution and the irreversible loss of Li is thereby reduced to attain an improvement in charge/discharge efficiency. As a result, the invention provides a nonaqueous secondary battery which has a high capacity and a high charge/discharge efficiency.

Means for Solving the Problems

The present inventors diligently made investigations in order to overcome the problems described above. As a result, the inventors have found that a nonaqueous secondary battery which has a high capacity and a high charge/discharge efficiency and further has high cycling characteristics is obtained by using composite graphite particle (C) for nonaqueous-secondary-battery negative electrode (hereinafter often referred to simply as "composite graphite particle (C)") as a negative-electrode material for the nonaqueous secondary battery, the composite graphite particle (C) including a graphite (A) and metallic particle (B) which are capable of alloying with Li (hereinafter often referred to simply as "metallic particle (B)") and having, when examined with a scanning electron microscope (SEM), a special feature which will be described later. The invention has been thus completed.

Specifically, a graphite (A) is mixed with metallic particle (B), and a rounding treatment is thereafter given thereto. Thus, composite graphite particle (C) into which the metallic particle (B) have been efficiently incorporated can be obtained. Here, ingredients other than the graphite (A) and metallic particle (B) may be mixed simultaneously.

In cases when a section of the composite graphite particles (C) is examined with an SEM, it is observed that the graphite (A) has a folded structure. It can be further seen that the presence ratio of the metallic particle (B) in the composite graphite particle (C), as calculated by the specific measuring method which will be described later, is 0.2 or higher.

The mechanism by which the composite graphite particle (C) is rendered useful as a negative-electrode material for nonaqueous secondary battery has not been elucidated in detail. However, since the composite graphite particle (C) contain the metallic particle (B) that have been incorporated in a large amount into the interstices possessed by the graphite (A), which has a folded structure, the possibility that the metallic particle (B) come into direct contact with an electrolytic solution is low as compared with negative-electrode materials which have the same capacity, i.e., which contain metallic particle (B) in the same amount. Because of this, the irreversible loss of Li ions due to reaction between the metallic particle (B) and a nonaqueous electrolytic solution decreases, that is, the charge/discharge efficiency improves.

In addition, compared even to generally known granulated composite graphite particle into which metallic particle (B) have been incorporated or to composite particles obtained by attaching metallic particle (B) to the outer surface of graphite particles in an amount larger than in inner parts of the particles, the composite graphite particle (C) of the invention have an advantage in that since the plurality of folded soft graphene layers of the graphite (A), into which the metallic particle (B) have been incorporated, expands and contracts when the metallic particle (B) undergo volume expansion, the volume expansion due to the metallic particle (B) is buffered (mitigated), thereby inhibiting the composite graphite particle (C) from undergoing disintegration due to volume expansion and from thereby causing conduction path breakage.

Namely, the essential points of the invention are as shown below under <1> to <8>.

< 1 > A composite graphite particle (C) for nonaqueous-secondary-battery negative electrode, the composite graphite particle (C) comprising a graphite (A) and a metallic particle (B) capable of alloying with Li, wherein
when a section of the composite graphite particle (C) is examined with a scanning electron microscope, a folded structure of the graphite (A) is observed and a presence ratio of the metallic particle (B) in the composite graphite particle (C), as calculated by the following measuring method, is 0.2 or higher:

(Measuring Method)

a section of the composite graphite particles (C) is examined with a scanning electron microscope to select any one particle; an area (a) of metallic particle (B) present in the one particle is calculated; next, the one particle and the background other than the one particle, are binarized, and a contraction processing is then repeatedly performed on the one particle to extract a shape which has an area that is 70% of the area of the one particle; an area (b) of metallic particle (B)' present within the shape is calculated; a value obtained by dividing the area (b) by the area (a) is calculated; similarly, any two particles are further selected, and a value obtained by dividing area (b) by area (a) is calculated for each particle; these values for the three particles are averaged; and the resultant average value is taken as the presence ratio of the metallic particle (B) in the composite graphite particle (C).

< 2 > The composite graphite particle (C) for nonaqueous-secondary-battery negative electrode according to the < 1 > above, wherein the metallic particle (B) comprises at least one of Si and $SiO_x$ (0<x<2).

< 3 > The composite graphite particle (C) for nonaqueous-secondary-battery negative electrode according to the < 1 > or < 2 > above, which comprises the metallic particle (B) in an amount of 1% by mass or larger but less than 30% by mass.

< 4 > The composite graphite particle (C) for nonaqueous-secondary-battery negative electrode according to any one of the < 1 > to < 3 > above, which has a tap density of 0.7 $g/cm^3$ or higher.

< 5 > An active material for nonaqueous-secondary-battery negative electrode, which comprises: the composite graphite particle (C) for nonaqueous-secondary-battery negative electrode according to any one of the < 1 > to < 4 > above; and one or more members selected from the group consisting of natural graphites, artificial graphites, graphites coated with a carbonaceous substance, resin-coated graphites, and amorphous carbon.

< 6 > A negative electrode for nonaqueous secondary battery, which comprises a current collector and a negative-electrode active material formed on the current collector, wherein the negative-electrode active material comprises the composite graphite particle (C) for nonaqueous-secondary-battery negative electrode according to any one of the < 1 > to < 4 > above.

< 7 > A negative electrode for nonaqueous secondary battery, which comprises a current collector and a negative-electrode active material formed on the current collector, wherein the negative-electrode active material comprises the active material for nonaqueous-secondary-battery negative electrode according to the < 5 > above.

< 8 > A nonaqueous secondary battery comprising: a positive electrode and negative electrode which are capable of occluding and releasing metal ions: and an electrolytic solution, wherein the negative electrode is the negative electrode for nonaqueous secondary battery according to the < 6 > or < 7 > above.

Effect of the Invention

The composite graphite particle (C) for nonaqueous-secondary-battery negative electrode according to the invention, when used as a negative-electrode active material for nonaqueous-secondary-battery negative electrode, are capable of providing a nonaqueous secondary battery having a high capacity and a high charge/discharge efficiency.

Brief Description of the Drawings

[Fig. 1] Fig. 1 is a scanning electron microscope (SEM) photograph of a section of some of the graphite particles of Example 1.
[Fig. 2] Fig. 2 is a scanning electron microscope (SEM) photograph of a section of some of the graphite particles of Comparative Example 1.
[Fig. 3] Fig. 3 is a scanning electron microscope (SEM) photograph of a section of some of the graphite particles of Comparative Example 2.
[Fig. 4] Fig. 4 is a scanning electron microscope (SEM) photograph of a section of some of the graphite particles of Comparative Example 6.
[Fig. 5] Fig. 5 is a scanning electron microscope (SEM) photograph of a section of composite graphite particles (C), and shows an example of methods for determining the presence ratio of metallic particle (B) in the composite graphite particle (C).

Modes for Carrying Out the Invention

The present invention is described below in detail. Incidentally, the following explanations on constituent elements of the invention are for embodiments (representative embodiments) of the invention, and the invention should not be construed as being limited to the following embodiments unless the invention departs from the spirit thereof.
In this description, "% by weight" and "weight ratio" have the same meanings as "% by mass" and "mass ratio", respectively.

The composite graphite particle (C) for nonaqueous-secondary-battery negative electrode of the invention include a graphite (A) and metallic particle (B) capable of alloying with Li, and are characterized in that when a section of the composite graphite particles (C) is examined with a scanning electron microscope, a folded structure of the graphite (A) is observed and the presence ratio of the metallic particle (B) in the composite graphite particle (C), as calculated by the measuring method which will be described later, is 0.2 or higher.

The composite graphite particle (C) may be produced by mixing at least a graphite (A) and metallic particle (B) capable of alloying with Li and subjecting the mixture to a rounding treatment.

<Graphite (A)>

Examples of the graphite (A), which is one of the constituent components of the composite graphite particle (C) of the invention, are shown below. However, the graphite (A) is not particularly limited, and a conventionally known graphite or a commercial product may be used. Alternatively, the graphite (A) may be produced by any process.

(Kinds of Graphite (A))

The graphite (A) can be obtained, for example, by subjecting a flake, lump, or plate natural graphite or a flake, lump, or plate artificial graphite produced, for example, by heating petroleum coke, coal pitch coke, coal needle coke, mesophase pitch, or the like at 2,500°C or higher to impurity removal, pulverization, sieving, and classification according to need.

Of these, the natural graphites are classified by property into flake graphite, crystalline (vein) graphite, and amorphous graphite (see the section Graphite in Funryutai Purosesu Gijutsu Shusei (published by Industrial Technology Center K.K. in 1974) and HANDBOOK OF CARBON, GRAPHITE, DIAMOND AND FULLERENES (published by Noyes Publications)).

With respect to the degree of graphitization, crystalline graphite has a highest degree of graphitization of 100%, which is followed by 99.9% for flake graphite. It is therefore preferred to use these graphites.

Flake graphite, among the natural graphites, occurs in Madagascar, China, Brazil, Ukraine, Canada, etc., while crystalline graphite occurs mainly in Sri Lanka. Amorphous graphite occurs mainly in the Korean Peninsula, China, Mexico, etc.

Of these natural graphites, flake graphite and crystalline graphite have advantages such as high degree of graphitization and low impurity content and can hence be advantageously used in the invention.

Examples of visual techniques for ascertaining that a graphite is flaky include a particle surface examination with a scanning electron microscope and a method in which the particles are embedded in a resin and a thin section of the resin is formed to obtain particle sections or a coating film including the particles is processed with a cross-section polisher and a cross-section of the coating film is thus formed to obtain particle sections, and the particle sections are then examined with a scanning electron microscope.

The flake graphite or crystalline graphite may be either a natural graphite which has been highly purified so that the crystallinity of the graphite is substantially perfect or a graphite formed artificially. It is preferable that the flake or crystalline graphite should be a natural graphite, from the standpoint that the natural graphite is soft and makes it easy to produce a folded structure.

(Properties of Graphite (A))

Properties of the graphite (A) in the invention are shown below. Although measuring methods in the invention are not particularly limited, the properties are determined in accordance with the measuring methods described in the Examples unless there are special circumstances.

• Volume-Average Particle Diameter (d50)

The volume-average particle diameter (d50) (in the invention, also called "average particle diameter d50") of the graphite (A) which has not been composited with metallic particle (B) is not particularly limited. However, the average particle diameter (d50) thereof is usually 1-120 $\mu$m, preferably 3-100 $\mu$m, more preferably 5-90 $\mu$m. So long as the average particle diameter (d50) thereof is within that range, composite graphite particle (C) in which metallic particle (B) are embedded can be produced. In case where the volume-average particle diameter (d50) of the graphite (A) is too large, the composite graphite particle (C) containing metallic particle (B) embedded therein have an increased particle diameter and there are cases where streak lines or surface irregularities due to large particles are formed in a step in which electrode materials including the composite graphite particles (C) are applied in the form of a slurry prepared by adding a binder and either water or an organic solvent thereto. In case where the volume-average particle diameter thereof is too small, it is impossible to produce composite graphite particle (C) in which the graphite (A) has been folded.

The term volume-average particle diameter (d50) herein means volume-based median diameter determined through particle size distribution analysis by laser diffraction/scattering.

• Average Aspect Ratio

The average aspect ratio, which is the ratio of the length of the major axis to the length of the minor axis, of the graphite (A) that has not been composited with metallic particle (B) is usually 2.1-10, preferably 2.3-9, more preferably 2.5-8. In cases when the aspect ratio thereof is within that range, not only it is possible to produce composite graphite particle (C) including the graphite (A) having a folded structure but also minute interstices are formed in the composite graphite particle (C). The minute interstices mitigate the volume expansion which accompanies charge/discharge, and can thereby contribute to an improvement in cycling characteristics.

• Tap Density

The tap density of the graphite (A) which has not been composited with metallic particle (B) is usually 0.1-1.0 $g/cm^3$, preferably 0.13-0.8 $g/cm^3$, more preferably 0.15-0.6 $g/cm^3$. In cases when the tap density of the graphite (A) is within that range, minute interstices are apt to be formed in the composite graphite particle (C).

Tap density is determined by the method which will be described later in the Examples.

• Specific Surface Area by BET Method

The specific surface area, determined by the BET method, of the graphite (A) which has not been composited with metallic particle (B) is usually 1-40 $m^2/g$, preferably 2-35 $m^2/g$, more preferably 3-30 $m^2/g$. The specific surface area by the BET method of the graphite (A) is reflected in the specific surface area of the composite graphite particle (C) including the graphite (A) having a folded structure. By regulating the specific surface area of the graphite (A) to 40 $m^2/g$ or less, the composite graphite particle (C) can be prevented from causing an increase in irreversible capacity and a resultant decrease in battery capacity when used as an active material for nonaqueous-secondary-battery negative electrode.

Specific surface area by the BET method is determined by the method which will be described later in the Examples.

• 002-Plane Interplanar Spacing ($d_{002}$) and Lc

The 002-plane interplanar spacing ($d_{002}$), determined by wide-angle X-ray diffractometry, of the graphite (A) is usually 0.337 nm or less. Meanwhile, a theoretical value of the 002-plane interplanar spacing of graphite is 0.335 nm. Consequently, the 002-plane interplanar spacing of the graphite is usually 0.335 nm or larger.

The crystallite size along the c axis (Lc) of the graphite (A), determined by wide-angle X-ray diffractometry, is 90 nm or larger, preferably 95 nm or larger.

In cases when the graphite (A) has a 002-plane interplanar spacing ($d_{002}$) of 0.337 nm or less, this means that the graphite (A) has high crystallinity, and composite graphite particle (C) having a high capacity can be obtained. Meanwhile, in cases when the Lc thereof is 90 nm or larger, this also means that the graphite has high crystallinity, and it is possible to obtain a negative-electrode material which employs composite graphite particle (C) including the graphite (A) and which has a high capacity.

002-plane interplanar spacing ($d_{002}$) and Lc, by wide-angle X-ray diffractometry, are determined by the methods which will be described later in the Examples.

• True Density

The true density of the graphite (A) which has not been composited with metallic particle (B) is usually 2.1 $g/cm^3$ or higher, preferably 2.15 $g/cm^3$ or higher, more preferably 2.2 $g/cm^3$ or higher. In cases when the graphite (A) is a highly crystalline graphite having a true density of 2.1 $g/cm^3$ or higher, composite graphite particle (C) having a low irreversible capacity and a high capacity can be obtained.

• Lengths of Particle Major Axis and Minor Axis

The length of the major axis of the graphite (A) which has not been composited with metallic particle (B) is usually 100 $\mu$m or less, preferably 90 $\mu$m or less, more preferably 80 $\mu$m or less.

The length of the minor axis of the graphite (A) is usually 0.9 $\mu$m or larger. In cases when the length of the minor axis of the graphite (A) is within that range, minute interstices are apt to be formed in the composite graphite particle (C) and the composite graphite particle (C), when used in a negative electrode for nonaqueous secondary battery, are capable of mitigating volume expansion which accompanies charge/discharge and of improving the cycling characteristics.

<Metallic particle (B) capable of Alloying with Li>

In the composite graphite particle (C) of the invention, the metallic particle (B) capable of alloying with Li has been embedded at least in the composite graphite particle (C) as described above.

(Kinds of Metallic particle (B) capable of Alloying with Li)

As the metallic particle (B) capable of alloying with Li, any of conventionally known such materials can be used. However, preferred from the standpoints of capacity and cycle life is either a metal selected from the group consisting of, for example, Fe, Co, Sb, Bi, Pb, Ni, Ag, Si, Sn, Al, Zr, Cr, P, S, V, Mn, Nb, Mo, Cu, Zn, Ge, As, In, Ti, W, etc., or a compound thereof. Furthermore, an alloy constituted of two or more metals may be used, or the metallic particles may be alloy particles constituted of two or more metallic elements. Preferred of these is a metal selected from the group consisting of Si, Sn, As, Sb, Al, Zn, and W or a compound thereof.

The metallic particle (B) is not limited in the crystalline state thereof, and any of single-crystalline, polycrystalline, and other particles can be used. It is, however, preferable that the metallic particle (B) should be polycrystalline, from the standpoint that particle diameter reduction is easy and rate characteristics can be heightened therewith.

Examples of the metal compound include metal oxides, metal nitrides, and metal carbides. Use may also be made of a metal compound including two or more metals.

It is more preferable, from the standpoint of increase in capacity, that the metallic particle (B) should be Si and/or an Si compound among those substances. In this description, Si and/or an Si compound is inclusively referred to as Si compound.

Specific examples of the Si compound include Si, $SiO_x$, $SiN_x$, $SiC_x$, and $SiZ_xO_y$ (Z=C, N) in terms of general formula. Preferred are Si and $SiO_x$. The general formula $SiO_x$ is obtained from Si dioxide ($SiO_2$) and metallic Si (Si) as raw materials. The value of x is usually 0<x<2, preferably 0.2-1.8, more preferably 0.4-1.6, even more preferably 0.6-1.4. So long as the value of x is within this range, not only a high capacity is attained but also the irreversible capacity due to the combining of Li with oxygen can be reduced.

A preferred form of the Si compound in the composite graphite particle (C) of the invention is a particulate form of the Si compound, i.e., Si compound particles.

Si and $SiO_x$ have a high theoretical capacity as compared with graphites. Furthermore, amorphous Si or nanometer-size Si crystals facilitate insertion and release of alkali ions, e.g., lithium ions, making it possible to obtain a high capacity. In the invention, it is preferred to use polycrystalline Si from the standpoint that particle diameter reduction is easy and rate characteristics can be heightened therewith.

Incidentally, the Si compound is not limited in the volume-average particle diameter (d50) or crystallite size thereof, and impurities may be present in the Si compound and on the surface of the compound.

(Properties of Metallic particle (B) capable of Alloying with Li)

The metallic particle (B) in the invention are not particularly limited so long as the particles are capable of alloying with Li. It is, however, preferable that the metallic particle (B) should have the following properties. Although measuring methods in the invention are not particularly limited, the properties are determined in accordance with the measuring methods described in the Examples unless there are special circumstances.

• Volume-Average Particle Diameter (d50)

From the standpoint of cycle life, the volume-average particle diameter (d50) of the metallic particle (B) in the composite graphite particle (C) is usually 0.005 $\mu$m or larger, preferably 0.01 $\mu$m or larger, more preferably 0.02 $\mu$m or larger, even more preferably 0.03 $\mu$m or larger, and is usually 10 $\mu$m or less, preferably 9 $\mu$m or less, more preferably 8 $\mu$m or less. In cases when the average particle diameter (d50) thereof is within that range, the volume expansion which accompanies charge/discharge is reduced and satisfactory cycling characteristics can be obtained while maintaining a charge/discharge capacity.

Average particle diameter (d50) is determined through particle size distribution analysis by laser diffraction/scattering, etc.

• BET method Specific Surface Area of Metallic particle (B)

The specific surface area, determined by the BET method, of the metallic particle (B) in the composite graphite particle (C) is usually 0.5-120 $m^2/g$, preferably 1-100 $m^2/g$. In cases when the specific surface area, determined by the BET method, of the metallic particles capable of alloying with Li is within that range, the battery has a high charge/discharge efficiency and a high discharge capacity and undergoes quick lithium insertion/release in high-speed charge/discharge to have excellent rate characteristics. That range of specific surface area is hence preferred.

• Oxygen Content of Metallic particle (B)

The oxygen content of the metallic particle (B) in the composite graphite particle (C) is not particularly limited. However, the oxygen content thereof is usually 0.01-20% by mass, preferably 0.05-10% by mass. With respect to the distribution of oxygen in the particles, the oxygen may be present in the vicinity of the surface, or present in inner parts of the particles, or present evenly throughout each particle. However, it is especially preferable that the oxygen should be present in the vicinity of the surface. In cases when the oxygen content of the metallic particles is within that range, the volume expansion accompanying charge/discharge is inhibited by the strong Si-O bonds and excellent cycling characteristics are attained. That oxygen content range is hence preferred.

• Crystallite Size of Metallic particle (B)

The crystallite size of the metallic particle (B) in the composite graphite particle (C) is not particularly limited. However, the crystallite size thereof, in terms of (111)-plane crystallite size calculated by XRD, is usually 0.05 nm or larger, preferably 1 nm or larger, and is usually 100 nm or less, preferably 50 nm or less. In cases when the crystallite size of the metallic particles is within that range, the reaction between the Si and Li ions proceeds quickly to bring out excellent input/output characteristics. That range of crystallite size is therefore preferred.

(Process for producing Metallic particle (B) capable of Alloying with Li)

As the metallic particle (B), use may be made of commercial metallic particles so long as the metallic particles satisfy the properties according to the invention. It is also possible to produce metallic particle (B) from metallic particles having a large particle diameter as a raw material, by giving thereto the mechanical energy treatment with a ball mill or the like which will be described later.
Processes for producing the metallic particles are not particularly limited. For example, metallic particles produced by the process described in Japanese Patent No. 3952118 can be used as the metallic particle (B). In the case of producing, for example, $SiO_x$, a powder of Si dioxide is mixed with a powder of metallic Si in a specific proportion, and this mixture is packed into a reaction vessel. Thereafter, at ordinary pressure or at a specific reduced pressure, the reaction vessel is heated to 1,000°C or higher and held, thereby evolving an $SiO_x$ gas. The gas is cooled to cause deposition. Thus, particles of the general formula $SiO_x$ can be obtained (sputtering). The deposit is reduced to particles by giving a mechanical energy treatment thereto, and the resultant particles can be used.
As raw materials for the metallic particle (B), any of conventionally known raw materials can be used. However, preferred from the standpoints of capacity and cycle life is either a metal selected from the group consisting of, for example, Fe, Co, Sb, Bi, Pb, Ni, Ag, Si, Sn, Al, Zr, Cr, P, S, V, Mn, Nb, Mo, Cu, Zn, Ge, As, In, Ti, W, etc., or a compound thereof. Furthermore, an alloy constituted of two or more metals may be used, or the metallic particles may be alloy particles constituted of two or more metallic elements. Preferred of these is a metal selected from the group consisting of Si, Sn, As, Sb, Al, Zn, and W or a compound thereof. Such raw materials for the metallic particles are not limited in the crystalline state thereof, and any of single-crystalline, polycrystalline, and other particles can be used.
The mechanical energy treatment is, for example, a method in which a device such as a ball mill, vibrating ball mill, planetary ball mill, rolling ball mill, bead mill, or the like is used, and the raw material packed into a reaction vessel and moving bodies which do not react with the raw material are introduced into the device and treated by vibrating or rotating the contents or giving thereto movements including a combination of these. Thus, metallic particles which are capable of alloying with Li and which satisfy the properties that will be described later can be formed.
The period of the mechanical energy treatment is usually 3 minutes or longer, preferably 5 minutes or longer, more preferably 10 minutes or longer, even more preferably 15 minutes or longer, and is usually 5 hours or less, preferably 4 hours or less, more preferably 3 hours or less, even more preferably 1 hour or less. Too long periods thereof result in a decrease in production efficiency, while too short periods thereof tend to give products having unstable properties.
The mechanical energy treatment is not particularly limited in temperature therefor. It is, however, preferable from the standpoint of process that the treatment should be conducted usually at a temperature which is not lower than the solidifying point of the solvent and is not higher than the boiling point thereof.

The metallic particle (B) capable of alloying with Li are regulated usually by reducing the size of the metallic particle (B) as finely as possible using a device for dry pulverization, such as a ball mill, vibrating mill, pulverizer, jet mill, or the like, and then finally adjusting the particle size by wet pulverization with a bead mill, although the particle size regulation depends on the size of the starting material. It is also possible to conduct the wet pulverization so that the metallic particles are mixed with a carbon material such as carbon black, Ketjen Black, or acetylene black and the mixture is pulverized and to use the resultant particles as such.

In the case of conducting the wet pulverization, it is desirable that a solvent having no or little reactivity with the metallic particle (B) should be suitably selected as the dispersion solvent to be used. If necessary, a dispersant (surfactant) may be added in a slight amount in order to make the metallic particle (B) be wetted by the dispersion medium. It is also desirable that a dispersant having no or little reactivity with the metallic particles capable of alloying with Li should be suitably selected as that dispersant.

• Kinds of Dispersion Solvent

Examples of the dispersion solvent include nonpolar compounds having an aromatic ring, aprotic polar solvents, and protonic polar solvents. Although the nonpolar compounds having an aromatic ring are not particularly limited in the kinds thereof, nonpolar solvents having no reactivity with the raw material for the metallic particle (B) are more preferred. Examples thereof include: aromatic compounds which are liquid at ordinary temperature, such as benzene, toluene, xylene, cumene, and methylnaphthalene; alicyclic hydrocarbons such as cyclohexane, methylcyclohexane, methylcyclohexene, and bicyclohexyl; and bottoms in petrochemistry and coal chemistry, such as gas oil and heavy oil. Of these, xylene is preferred and methylnaphthalene is more preferred. Heavy oil is even more preferred because of the high boiling point thereof.

In cases when the wet pulverization is conducted in such a manner as to heighten the efficiency of pulverization, heat generation is apt to be enhanced. In the case of a solvent having a low boiling point, there is a possibility that volatilization might undesirably result in a high concentration. Meanwhile, preferred as the aprotic polar solvents are ones in which not only water but also organic solvents dissolve, such as NMP (N-methyl-2-pyrrolidone), GBL (y-butyrolactone), and DMF (N,N-dimethylformamide). Of these, NMP (N-methyl-2-pyrrolidone) is preferred from the standpoint that this solvent is less apt to decompose and has a high boiling point. Examples of the protonic polar solvents include ethanol and 2-propanol, and 2-propanol is preferred from the standpoint of the high boiling point thereof.

With respect to the mixing ratio between the metallic particle (B) and the dispersion solvent, the proportion of the dispersion solvent based on the metallic particle (B) is usually 10% by mass or higher, preferably 20% by mass or higher, and is usually 50% by mass or less, preferably 40% by mass or less.

Too high mixing ratios of the dispersion solvent tend to result in an increase in cost, while too low mixing ratios thereof tend to result in difficulties in evenly dispersing the metallic particle (B).

• Kinds of Dispersant

A dispersant may be used for producing the metallic particle (B). Examples of the dispersant include high-molecular-weight polyester/acid amide amine compounds, polyetherester/acid amine salts, polyethylene glycol/phosphoric acid esters, primary to tertiary amines, and quaternary amine salts. Of these, high-molecular-weight polyester/acid amide amine compounds are preferred from the standpoint that the effect of dispersing based on steric hindrance is apt to be obtained therewith.

• Nitriding of Metallic particle (B)

It is preferable that bonds between each metallic particle (B) and nitrogen atoms should be formed, from the standpoints that in cases when the metallic particle (B) capable of alloying with Li have bonds with nitrogen atoms on the surface thereof, not only the metallic particle (B) are inhibited from having oxides unable to contribute to charge/discharge and the metallic particles hence have an improved capacity per unit weight, but also the metallic particle (B) can have reduced surface reactivity to improve the efficiency of charge/discharge.

The bonds between each metallic particle (B) and nitrogen atoms can be ascertained through analysis by a method such as XPS, IR, or XAFS.

For forming bonds between each metallic particle (B) and nitrogen atoms, use may be made of a method in which a compound having a nitrogen atom is mixed during the sputtering or mechanical energy treatment. It is also possible to mix the metallic particle (B) with a compound having a nitrogen atom and give thermal energy thereto to thereby form the bonds.

<Other Materials>

Materials other than the graphite (A) and the metallic particle (B) may be mixed for the composite graphite particle (C) for nonaqueous-secondary-battery negative electrode of the invention.

(Fine Carbon Particles)

The composite graphite particle (C) of the invention may contain fine carbon particles from the standpoint of improving the electrical conductive properties.

• Volume-Average Particle Diameter (d50)

The volume-average particle diameter (d50) of the fine carbon particles is usually 0.01-10 $\mu$m. The volume-average particle diameter thereof is preferably 0.05 $\mu$m or larger, more preferably 0.07 $\mu$m or larger, even more preferably 0.1 $\mu$m or larger, and is preferably 8 $\mu$m or less, more preferably 5 $\mu$m or less, even more preferably 1 $\mu$m or less.

In the case where the fine carbon particles have a secondary structure formed by the gathering and agglomeration of primary particles, these fine carbon particles are not particularly limited in the properties or kind thereof so long as the primary-particle diameter thereof is 3-500 nm. However, the primary-particle diameter thereof is preferably 3 nm or larger, more preferably 15 nm or larger, even more preferably 30 nm or larger, especially preferably 40 nm or larger, and is preferably 500 nm or less, more preferably 200 nm or less, even more preferably 100 nm or less, especially preferably 70 nm or less. The primary-particle diameter of fine carbon particles can be measured through an examination with an electron microscope, e.g., an SEM, a laser diffraction type particle size distribution analyzer, etc.

• Kinds of Fine Carbon Particles

The shape of the fine carbon particles is not particularly limited, and may be any of granular, spherical, chain, acicular, fibrous, platy, flaky, and other shapes.

Specific examples of the fine carbon particles, which are not particularly limited, include a fine coal powder, vapor-phase carbon powder, carbon black, Ketjen Black, and carbon nanofibers. Especially preferred of these is carbon black. In cases when the fine carbon particles are carbon black, heightened input/output characteristics are obtained even at low temperatures and there also is an advantage that the fine carbon particles are easily available at low cost.

(Carbon Precursor)

A carbon precursor may be mixed for the composite graphite particle (C) of the invention in order to inhibit the metallic particle (B) from reacting with a nonaqueous electrolytic solution.

The carbon precursor covers the periphery of each metallic particle (B) and can thereby inhibit the metallic particle (B) from reacting with a nonaqueous electrolytic solution.

• Kinds of Carbon Precursor

Preferred as the carbon precursor are the carbon material(s) shown under ($\alpha$) and/or ($\beta$) below

($\alpha$) One or more carbonizable organic substances selected from the group consisting of coal-based heavy oil, straight-run heavy oil, heavy oil from petroleum cracking, aromatic hydrocarbons, N-ring compounds, S-ring compounds, polyphenylenes, organic synthetic polymers, natural polymers, thermoplastic resins, and thermosetting resins.

($\beta$) A solution obtained by dissolving the carbonizable organic substance(s) in a low-molecular-weight organic solvent.

Preferred as the coal-based heavy oil are coal tar pitches ranging from soft pitch to hard pitch, dry-distillation/liquefaction oil, and the like. Preferred as the straight-run heavy oil are topping residues, vacuum distillation residues, and the like. Preferred as the heavy oil from petroleum cracking are ethylene tar, which is yielded as a by-product of the thermal cracking of crude oil, naphtha, etc., and the like. Preferred as the aromatic hydrocarbons are acenaphthylene, decacyclene, anthracene, phenanthrene, and the like. Preferred as the N-ring compounds are phenazine, acridine, and the like. Preferred as the S-ring compounds are thiophene, bithiophene, and the like. Preferred as the polyphenylenes are biphenyl, terphenyl, and the like. Preferred as the organic synthetic polymers are poly(vinyl chloride), poly(vinyl alcohol), poly(vinyl butyral), products of insolubilization of these polymers, nitrogen-containing polymers such as polyacrylonitrile, polypyrrole, polyallylamine, polyvinylamine, polyethyleneimine, urethane resins, and urea resins, polythiophene, polystyrene, poly(methacrylic acid), and the like. Preferred as the natural polymers are polysaccharides, such as cellulose, lignin, mannan, poly(galacturonic acid), chitosan, and saccharose, and the like. Preferred as the thermoplastic resins are poly(phenylene sulfide), poly(phenylene oxide), and the like. Preferred as the thermosetting resins are furfuryl alcohol resins, phenol-formaldehyde resins, imide resins, and the like.

The carbonizable organic substance may be a product of carbonization of, for example, a solution prepared by dissolving a carbonizable organic substance in a low-molecular-weight organic solvent such as benzene, toluene, xylene, quinoline, or n-hexane. One of those substances may be used alone, or any desired two or more thereof may be used in combination.

• X-Ray Parameters of Carbonaceous Substance obtained by burning Carbon Precursor

A powder of a carbonaceous substance obtained by burning the carbon precursor has a (002)-plane interplanar spacing ($d_{002}$), determined by wide-angle X-ray diffractometry, which is usually 0.340 nm or larger, preferably 0.342 nm or larger, and is usually less than 0.380 nm, preferably 0.370 nm or less, more preferably 0.360 nm or less. Too large values of $d_{002}$ indicate that the crystallinity is low and tend to result in a decrease in cycling characteristics. In cases when the value of $d_{002}$ is too small, the effect of compositing with the carbonaceous substance is difficult to obtain.

The powder of a carbonaceous substance obtained by burning the carbon precursor has a crystallite size (Lc(002)) of the carbonaceous substance, determined by X-ray diffractometry in accordance with the method of the Japan Society of Promotion of Scientific Research, which is usually 5 nm or larger, preferably 10 nm or larger, more preferably 20 nm or larger, and is usually 300 nm or less, preferably 200 nm or less, more preferably 100 nm or less. Too large crystallite sizes tend to result in a decrease in cycling characteristics, while too small crystallite sizes result not only in a decrease in charge/discharge reactivity but also in a possibility that gas evolution might be enhanced during high-temperature storage or the high-current charge/discharge characteristics might decrease.

(Polymer containing Nitrogen Atoms)

A polymer containing nitrogen atoms may be mixed for the composite graphite particle (C) of the invention in order to inhibit the metallic particle (B) from reacting with a nonaqueous electrolytic solution.

The polymer containing nitrogen atoms covers the periphery of each metallic particle (B) and can thereby inhibit the metallic particle (B) from reacting with a nonaqueous electrolytic solution.

Incidentally, the term "polymer containing nitrogen atoms" used in this description means a polymer which is included in some of the carbon precursors described above. However, the polymer containing nitrogen atoms does not include the coal-based heavy oil, straight-run heavy oil, and heavy oil from petroleum cracking.

• Content of Nitrogen Atoms in the Polymer

The nitrogen atom content (%) in the polymer containing nitrogen atoms is usually 1% or higher, preferably 5% or higher, more preferably 10% or higher, even more preferably 15% or higher, especially preferably 20% or higher, most preferably 25% or higher, and is usually 80% or less, preferably 70% or less, more preferably 60% or less, even more preferably 50% or less, especially preferably 40% or less, most preferably 30% or less.

In case where the content of nitrogen atoms is too high, there is a tendency that bonds between the Si and nitrogen atoms are formed in too large an amount, resulting in an increase in the amount of resistive components. In case where the content of nitrogen atoms is too low, there is a tendency that reaction between the Si and oxygen atoms proceeds, resulting in a decrease in capacity.

In this description, the content (%) of nitrogen atoms in a polymer is defined as (molecular weight of the nitrogen atom(s) in the monomer of the smallest repeating unit of the polymer)/(molecular weight of all the atoms in the monomer of the smallest repeating unit of the polymer)×100.

• Molecular Weight

The weight-average molecular weight of the polymer containing nitrogen atoms is not particularly limited. However, the weight-average molecular weight thereof is usually 500 or higher, preferably 1,000 or higher, more preferably 1,500 or higher, even more preferably 2,000 or higher, especially preferably 2,500 or higher. Meanwhile, the weight-average molecular weight thereof is usually 1,000,000 or less, preferably 500,000 or less, more preferably 300,000 or less, even more preferably 100,000 or less, especially preferably 50,000 or less, most preferably 10,000 or less. In case where the molecular weight thereof is too low, an increase in specific surface area results and, hence, incorporation into the particles tends to result in a decrease in charge/discharge efficiency. In case where the molecular weight thereof is too high, there is a tendency that this polymer has too high a viscosity and is difficult to evenly mix or disperse.

The term weight-average molecular weight as used in this description means either weight-average molecular weight measured by gel permeation chromatography (GPC) using tetrahydrofuran (THF) as a solvent and calculated for standard polystyrene or weight-average molecular weight measured by GPC using an aqueous solvent, dimethylformamide (DMF), or dimethyl sulfoxide (DMSO) as a solvent and calculated for standard polyethylene glycol.

• Burning Yield

The burning yield of the polymer containing nitrogen atoms is usually 20% or higher, preferably 25% or higher, more preferably 30% or higher, even more preferably 35% or higher, and is usually 90% or less, preferably 70% or less, more preferably 60% or less, even more preferably 50% or less. In case where the burning yield thereof is too low, an increase in specific surface area results and, hence, incorporation into the particles tends to result in a decrease in charge/discharge efficiency.

The burning yield (%) of a resin is determined by a method in which a 10-g portion of a specimen is weighed out, burned at 720° for 1 hour in an $N_2$ atmosphere, and subsequently burned at 1,000°C for 1 hour in an $N_2$ atmosphere, and the burned specimen is weighed to calculate the yield using (weight of the burned specimen)/(weight of the unburned specimen) $\times$ 100.

• Decomposition Temperature

The decomposition temperature of the polymer containing nitrogen atoms is usually 150°C or higher, preferably 170°C or higher, more preferably 200°C or higher, and is 500°C or lower, preferably 450°C or lower, more preferably 400°C or lower. In case where the decomposition temperature thereof is too low, there is a possibility that the polymer might be prone to decompose readily. Meanwhile, in case where the decomposition temperature thereof is too high, there is a possibility that this polymer might be difficult to dissolve in solvents and to disperse evenly.

Decomposition temperature can be measured through an examination for pyrolysis temperature in an inert atmosphere with a TG-DTA apparatus.

• Kinds of the Polymer

Examples of such polymers containing nitrogen atoms include polyamides, polyimides, polyacrylonitrile, polypyrrole, polyallylamine, polyvinylamine, polyethyleneimine, poly(N-methylallylamine), poly(N,N-dimethylallylamine), polydiallylamine, poly(N-methyldiallylamine), urethane resins, and urea resins. Preferred of these are polyacrylonitrile, polyallylamine, and polyvinylamine, because a cyclic structure is easy to obtain therewith through burning.

(Resin serving as Pore-Forming Material)

A resin or the like may be mixed, as a pore-forming material, for the composite graphite particle (C) of the invention in order to mitigate the breakage of the composite graphite particle (C) due to the expansion/contraction of the metallic particle (B). Incidentally, the term "resin serving as a pore-forming material" used in this description means a resin which is included in some of the carbon precursors described above. However, the resin serving as a pore-forming material does not include the coal-based heavy oil, straight-run heavy oil, and heavy oil from petroleum cracking.

• Molecular Weight

The weight-average molecular weight of the resin serving as a pore-forming material is not particularly limited. However, the weight-average molecular weight thereof is usually 500 or higher, preferably 1,000 or higher, more preferably 1,500 or higher, even more preferably 2,000 or higher, especially preferably 2,500 or higher. Meanwhile, the weight-average molecular weight thereof is usually 1,000,000 or less, preferably 500,000 or less, more preferably 300,000 or less, even more preferably 100,000 or less, especially preferably 50,000 or less, most preferably 10,000 or less. In case where the molecular weight thereof is too low, an increase in specific surface area results and, hence, incorporation into the particles tends to result in a decrease in charge/discharge efficiency. In case where the molecular weight thereof is too high, there is a tendency that this resin has too high a viscosity and is difficult to evenly mix or disperse.

• Burning Yield

The burning yield of the resin serving as a pore-forming material is usually 0.1% or higher, preferably 1% or higher, more preferably 5% or higher, even more preferably 10% or higher, and is usually less than 20%, preferably 18% or less, more preferably 16% or less, even more preferably 14% or less. In case where the burning yield thereof is too high, there is a tendency that no pores are formed, resulting in a decrease in the effect of mitigating the expansion/contraction of the metallic particle (B).

• Decomposition Temperature

The decomposition temperature of the polymer containing nitrogen atoms is usually 30°C or higher, preferably 50°C or higher, more preferably 100°C or higher, even more preferably 150°C or higher, and is 500°C or lower, preferably 400°C or lower, more preferably 300°C or lower, even more preferably 200°C or lower. In case where the decomposition temperature thereof is too low, there is a possibility that the resin might be prone to decompose readily. Meanwhile, in case where the decomposition temperature thereof is too high, there is a possibility that this resin might be difficult to dissolve in solvents and to disperse evenly.

• Kinds of the Resin

Resins usable as a pore-forming material are not particularly limited. Examples thereof include poly(vinyl alcohol), polyethylene glycol, polycarbosilanes, poly(acrylic acid), and cellulosic polymers. Poly(vinyl alcohol) and polyethylene glycol can be especially advantageously used from the standpoint that these resins leave a small amount of carbon upon burning and have a relatively low decomposition temperature.

<Composite graphite particle (C) for nonaqueous-secondary-battery negative electrode>

The composite graphite particle (C) of the invention include a graphite (A) and metallic particle (B) capable of alloying with Li, and are characterized in that when a section of the composite graphite particles (C) is examined with an SEM (scanning electron microscope), a folded structure of the graphite (A) is observed and the presence ratio of the metallic particle (B) in the composite graphite particle (C), as calculated by the measuring method which will be described later, is 0.2 or higher.

• Folded Structure of Graphite (A)

In the composite graphite particle (C) obtained by the production process of the invention, the graphite (A) has a folded structure. There is no limitation on the kind of the graphite (A). However, in the case of a flake or crystalline graphite, for example, it is known that when stress is imposed thereon in a direction parallel with the basal planes of the graphite crystals, basal planes of the graphite crystals come to overlie each other and the flake or crystalline graphite is thereby rounded while coming to have a concentric or folded structure (Materials Integration, Vol.17, No.1 (2004)).

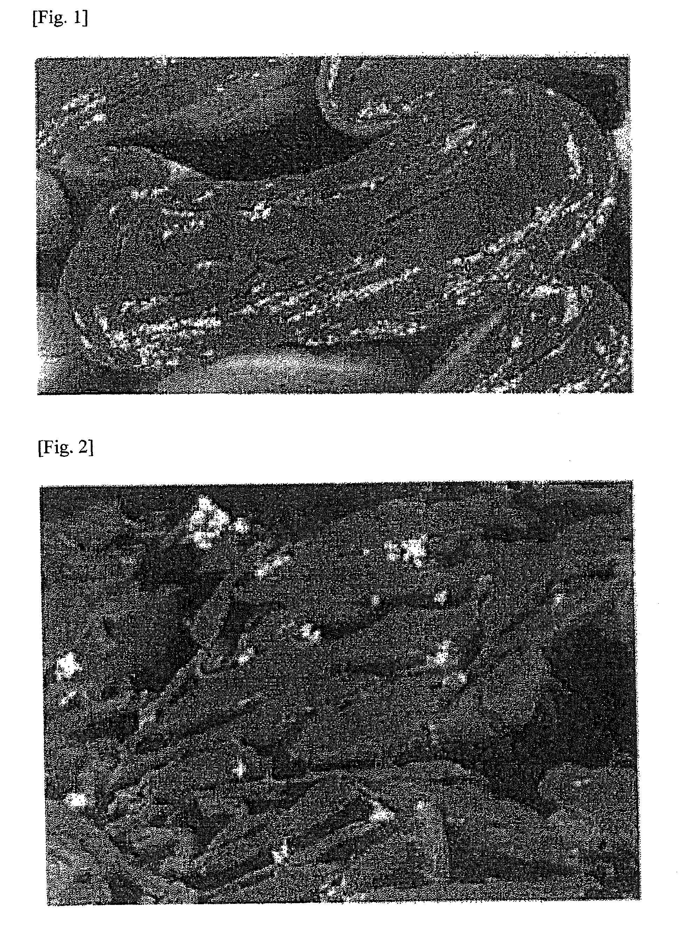

More specifically, the composite graphite particle (C) have a configuration in which a plurality of flake- or crystalline-graphite particles have been made, by a rounding treatment, to have a curved shape or bent shape and to have a rounded shape as a whole. Because of this, the individual flake- or crystalline-graphite particles have no planes having specific orientation. Furthermore, when the flake or crystalline graphite which constitutes each composite graphite particle (C) is viewed as a whole, the curved or bent graphite has a shape wherein the graphite surface has been rounded so that lines perpendicular to any curved or bent, flake- or crystalline-graphite particle plane, at least in the vicinity of the surface, and crossing the plane at various points are directed to a substantially central portion of the composite graphite particle (C) for nonaqueous-secondary-battery negative electrode (see, for example, Fig. 1).

Such a structure can be ascertained by various examination methods including: an examination of the surface of the composite graphite particles (C) with a scanning electron microscope; and a method in which the composite graphite particles (C) are embedded in a resin or the like and a thin section of the resin is formed to obtain particle sections or a coating film including the particles is prepared and subjected to processing with a focused ion beam (FIB) or ion milling and a cross-section of the coating film is thus formed to obtain particle sections, and the particle sections are then examined with a scanning electron microscope.

It is important that the metallic particle (B) should be present in the interstices within the folded structure of the graphite (A). Whether the metallic particle (B) are thus present or not can be assessed by various examination methods including: an examination of the particle surface with a scanning electron microscope; and a method in which the composite graphite particles (C) are embedded in a resin or the like and a thin section of the resin is formed to obtain particle sections or a coating film including the particles is prepared and subjected to processing with a focused ion beam (FIB) or ion milling and a cross-section of the coating film is thus formed to obtain particle sections, and the particle sections are then examined with a scanning electron microscope.

The interstices present in the composite graphite particle (C) may be voids, or a substance which buffers the expansion/contraction of the metallic particles capable of alloying with Li, such as amorphous carbon, a graphitic substance, or a resin, may be present in the interstices.

• Presence Ratio of Metallic particle (B) in Composite graphite particle (C)

The presence ratio of the metallic particle (B) in the composite graphite particle (C), which is determined by the following measuring method, is 0.2 or higher, preferably 0.3 or higher, more preferably 0.4 or higher, even more preferably 0.5 or higher, especially preferably 0.6 or higher, and is usually 1.5 or less, preferably 1.2 or less, more preferably 1.0 or less. The higher the value thereof within that range, the more the proportion of metallic particle (B) present inside the composite graphite particle (C) to metallic particle (B) present outside the composite graphite particle (C) may become higher, and the more the decrease in charge/discharge efficiency due to interparticulate conduction path breakage after negative-electrode formation tends to be able to be inhibited.

The presence ratio of the metallic particle (B) in the composite graphite particle (C) of the invention is calculated in the following manner. First, a coating film of the composite graphite particle (C) is formed, or the composite graphite particle (C) are embedded in a resin or the like to form a thin section of the resin. Particle sections are obtained therefrom using a focused ion beam (FIB) or ion milling. Thereafter, the particle sections can be examined by various examination methods including an examination of the particle sections with an SEM (scanning electron microscope).

When a section of one of the composite graphite particles (C) is examined with an SEM (scanning electron microscope), the accelerating voltage is usually preferably 1 kV or higher, more preferably 2 kV or higher, even more preferably 3 kV or higher, and is usually 10 kV or less, more preferably 8 kV or less, even more preferably 5 kV or less. So long as the accelerating voltage is within that range, an SEM image is obtained in which the graphite particle can be easily distinguished from the Si compound on the basis of a difference in backscattered secondary-electron image. The imaging magnification is usually 500 diameters or higher, more preferably 1,000 diameters or higher, even more preferably 2,000 diameters or higher, and is usually 10,000 diameters or less. So long as the magnification is within that range, an image of the whole of one of the composite graphite particles (C) can be acquired. The resolution may be 200 dpi (ppi) or higher, preferably 256 dpi (ppi) or higher. With respect to the number of pixels, it is preferred to evaluate the image in which the number of pixels is 800 or larger. Next, while examining the image, elemental discrimination between the graphite (A) and the metallic particle (B) is made by energy dispersive X-ray spectroscopy (EDX) and wavelength dispersive X-ray spectrometry (WDX).

Of the images acquired, any one composite graphite particle (C) is extracted. The area (a) of metallic particle (B) present in the particle is calculated. Next, the one particle extracted and the background, which is the portion other than the one particle, are binarized, and contraction processing is then repeatedly performed on the particle to extract a shape which has an area that is 70% of the area of the extracted particle. The area (b) of metallic particle (B)' present within the shape is calculated. In the case where repetitions of the contraction processing have failed to give a shape having a value of accurately 70% in area, the shape in which the value is closest to 70% and is within the range of 70±3% is taken as the 70% shape in this patent.

For the extraction of one particle, area calculation, binarization, and contraction processing, use can be made of an image processing software for general use. Examples thereof include softwares such as "Image J" and "Image-Pro plus".

Similarly, any two particles are further selected, and a value obtained by dividing area (b) by area (a) is calculated for each particle. These values for the three particles are averaged, and the resultant average value is taken as the presence ratio of the metallic particle (B) in the composite graphite particle (C). The term "average" herein means arithmetic mean.

With respect to the sections of composite graphite particles (C) which are to be examined by the method described above, the composite graphite particles (C) to be subjected to the examination according to the invention are selected under such conditions that the particles are arbitrarily selected from composite particles which satisfy the following requirements (i) to (iv). Incidentally, any particles not configured of a graphite (A) and/or metallic particle (B) are excluded from the particles capable of being subjected to the examination. Usually, the composite graphite particles (C) to be subjected to the examination may be ones in which at least one composite graphite particle (C) that satisfies the requirements and satisfies the requirements according to the invention is present. It is, however, desirable that the proportion in number of such composite graphite particles (C) to the whole composite graphite particles (C) to be subjected to the examination should be usually 30%, more preferably 50%, even more preferably 90% or larger, especially preferably 99% or larger.

(i) Structure of Graphite (A) in Composite graphite particle (C)

Composite graphite particles (C) in each of which the graphite (A) within the composite graphite particle (C) has a folded structure are subjected to the examination.

The folded structure of the graphite (A) within a composite graphite particle (C) preferably is such a structure that the one particle of graphite (A) in the composite graphite particle (C) has two or more different directions of orientation. A particle of graphite (A) which has at least one such structure therein is regarded as the graphite (A) having a folded structure according to the invention.

(ii) Particle Diameter of Composite graphite particle (C)

In an examination of sections of composite graphite particles (C), each composite graphite particle (C) in which the ratio of the length of the major axis to the volume-average particle diameter (d50) is 0.7-1.3 is regarded as a particle to be examined. Incidentally, the term "major axis" means the longest line segment which passes through the centroid of the particle.

(iii) Particle Shape of Composite graphite particle (C)

Composite graphite particles (C) which satisfy (i) and (ii) described above but have clearly broken or split are excluded because these composite graphite particles (C) are unsuitable for evaluation of the composite graphite particles (C).

(iv) State in which Metallic particle (B) are present

Composite graphite particle (C) in which the graphite (A) has the folded structure described under (i) above and in which the presence of metallic particle (B) in interstices within the structure having two or more different directions of orientation can be ascertained in each graphite particle are regarded as particles to be examined.
Sections of such particles to be examined, which satisfy all the requirements (i) to (iv), are examined to calculate the presence ratio the metallic particle (B) in the composite graphite particle (C).

(Properties of Composite graphite particle (C) for nonaqueous-secondary-battery negative electrode)

The composite graphite particle (C) for nonaqueous-secondary-battery negative electrode are not particularly limited so long as when a section of the composite graphite particles is examined with an SEM (scanning electron microscope), the graphite (A) has a folded structure and the presence ratio of the metallic particle (B) in the composite graphite particle (C), which is calculated by the measuring method described above, is 0.2 or higher. However, it is preferable that the composite graphite particle (C) should have the following properties.

• Nitrogen Atoms in Composite graphite particle (C)

It is preferable that the composite graphite particle (C) of the invention should contain nitrogen atoms. The inclusion of nitrogen atoms converts highly reactive functional groups present on the surface of the metallic particle (B) into inactive nitrides to inhibit side reactions between the surface of the metallic particle (B) and a nonaqueous electrolytic solution. Consequently, the irreversible capacity can be inhibited from increasing and the charge/discharge efficiency can be improved. Examples of the form in which the nitrogen atoms are present in the composite graphite particle (C) include nitrogen compounds. The nitrogen compounds are not limited so long as the nitrogen compounds are compounds in which a C-N bond, Si-N bond, O-N bond, or the like is observed. Preferred of these are compounds having a C-N bond or an Si-N bond. For ascertaining these bonds, analysis by a method such as XPS, IR, or XAFS can be used.

• Surface Functional-Group Amount N/Si Value of Composite graphite particle (C)

It is preferable that the composite graphite particle (C) should contain nitrogen atoms, and the surface functional-group amount N/Si value which is represented by the following expression (1) is usually 0.05% or higher, preferably 0.1% or higher, more preferably 0.15% or higher, even more preferably 0.2% or higher, especially preferably 0.5% or higher, most preferably 1.0% or higher, and is usually 50% or less, preferably 20% or less, more preferably 10% or less, even more preferably 5% or less, especially preferably 2% or less, most preferably 1.5% or less. In case where the surface functional-group amount N/Si value is too small, reactivity between the surface of the metallic particle (B) and nonaqueous electrolytic solutions tends to increase, resulting in an increase in irreversible capacity. In case where the surface functional-group amount N/Si value is too large, there is a tendency that the surface of the metallic particle (B) tends to have increased resistance, leading to a decrease in output.

Expression 1

N/Si value (%) = (N atom concentration determined from N1s spectrum peak area in X-ray photoelectron spectroscopy (XPS))/(Si atom concentration determined from Si2p spectrum peak area in XPS)×100

The surface functional-group amount N/Si value in the invention can be determined using X-ray photoelectron spectroscopy (XPS) in the following manner.

An X-ray photoelectron spectroscope is used as an apparatus for X-ray photoelectron spectroscopy. A specimen to be examined is placed on the sample stage so that the surface of the specimen is flat. The K$\alpha$ line of aluminum is used as an X-ray source to examine the specimen for spectrum with respect to N1s (394-412 eV) and Si2p (95-112 eV) by a multiplex measurement. The energy for the peak top of the lower-energy-side Si2p peak obtained is taken as 99.5 eV to conduct charge correction, and the peak areas of the N1s and Si2p spectra are determined. Furthermore, the peak areas are divided by the sensitivity coefficient of the apparatus to calculate the surface N atom concentration and surface Si atom concentration. The ratio of the N atom concentration to Si atom concentration obtained, N/Si (N atom concentration/Si atom concentration), is defined as the surface functional-group amount N/Si value of the specimen (composite graphite particle).

• (002)-plane Interplanar Spacing ($d_{002}$) of Composite graphite particle (C)

The (002)-plane interplanar spacing ($d_{002}$), determined by wide-angle X-ray diffractometry, of the composite graphite particle (C) of the invention is usually 0.337 nm or less. Meanwhile, a theoretical value of the 002-plane interplanar spacing of graphite is 0.335 nm. Consequently, the 002-plane interplanar spacing of the graphite is usually 0.335 nm or larger. Furthermore, the Lc of the graphite (A), determined by wide-angle X-ray diffractometry, is 90 nm or larger, preferably 95 nm or larger. That the (002)-plane interplanar spacing ($d_{002}$) and Lc thereof determined by wide-angle X-ray diffractometry are within those ranges shows that the composite graphite particle (C) give a high-capacity electrode.

• Tap Density of Composite graphite particle (C)

The tap density of the composite graphite particle (C) of the invention is usually 0.5 g/cm$^3$ or higher, preferably 0.6 g/cm$^3$ or higher, more preferably 0.7 g/cm$^3$ or higher, even more preferably 0.8 g/cm$^3$ or higher.

That the composite graphite particle (C) of the invention have a large value of tap density is an index to the feature wherein the composite graphite particle (C) are spherical. That the tap density thereof is low is an index to the state in which the composite graphite particle (C) have not become sufficiently spherical particles. In case where the tap density thereof is lower, there is a tendency that communicating interstices are not sufficiently ensured in the electrode and the Li ions in the electrolytic solution held in the interstices show reduced movability, resulting in a decrease in quick charge/discharge characteristics.

• Raman R Value of Composite graphite particle (C)

The Raman R value of the composite graphite particle (C) of the invention, which is the ratio of the intensity of a peak appearing at around 1,360 cm$^{-1}$ to the intensity of a peak appearing at around 1,580 cm$^{-1}$ in the argon ion laser Raman spectrum thereof, is usually 0.05-0.4, preferably 0.1-0.35. So long as the Raman R value thereof is within that range, the surface of the composite graphite particle (C) has ordered crystallinity and a high capacity can be expected.

• Specific Surface Area by BET Method of Composite graphite particle (C)

The specific surface area, determined by the BET method, of the composite graphite particle (C) of the invention is usually 40 m$^2$/g or less, preferably 35 m$^2$/g or less, more preferably 30 m$^2$/g or less, and is usually 0.1 m$^2$/g or larger, preferably 0.7 m$^2$/g or larger, more preferably 1 m$^2$/g or larger. In case where the specific surface area thereof is too large, the composite graphite particle (C), when used as an active material for negative electrodes, show enhanced reactivity because contact between the composite graphite particle (C) and the nonaqueous electrolytic solution occurs in larger areas. Consequently, gas evolution is prone to be enhanced, and a preferred battery tends to be difficult to obtain. In case where the specific surface area thereof is too small, the composite graphite particle (C) tend to show impaired lithium ion acceptance properties during charge when used as an active material for negative electrodes.

• Volume-Average Particle Diameter (d50) of Composite graphite particle (C)

The volume-average particle diameter (d50) of the composite graphite particle (C) of the invention is usually 50 μm or less, preferably 40 μm or less, more preferably 30 μm or less, and is usually 1 μm or larger, preferably 4 μm or larger, more preferably 6 μm or larger. In case where the average particle diameter d50 thereof is too large, there are problems concerning streak lines during application, etc. In case where the average particle diameter d50 thereof is too small, the composite graphite particle (C) tend to require a binder in a larger amount, resulting in increased resistance and a decrease in high-current-density charge/discharge characteristics.

• Content of Metallic particle (B) in Composite graphite particle (C)

The content of the metallic particle (B) in the composite graphite particle (C) is usually 0.5% by mass or higher, preferably 1% by mass or higher, more preferably 1.5% by mass or higher, even more preferably 2% by mass or higher, based on the composite graphite particle (C). Meanwhile, the content thereof is usually 99% by mass or less, preferably 70% by mass or less, more preferably 50% by mass or less, even more preferably less than 30% by mass, especially preferably 25% by mass or less. Contents thereof within that range are preferred because a sufficient capacity can be obtained thereby. Incidentally, the content of the metallic particle (B) in the composite graphite particle (C) is determined by the method which will be described later.

• Porosity of Composite graphite particle (C)

The porosity of the composite graphite particle (C), based on the graphite (A) of the composite graphite particle (C), is usually 1% or higher, preferably 3% or higher, more preferably 5% or higher, even more preferably 7% or higher. Meanwhile, the porosity thereof is usually less than 50%, preferably 40% or less, more preferably 30% or less, even more preferably 20% or less. In case where the internal porosity thereof is too low, the intraparticulate solution amount tends to be reduced, resulting in a deterioration in charge/discharge characteristics. In case where the porosity thereof is too high, the composite graphite particle (C) give an electrode which tends to have a smaller amount of interparticulate interstices, resulting in insufficient diffusion of the electrolytic solution. A substance which buffers the expansion/contraction of the metallic particle (B) capable of alloying with Li, such as amorphous carbon, a graphitic substance, or a resin, may be present in the voids, or the voids may have been filled with the substance.

• Orientation Parameter Intensity Ratio I(110)/I(004) of Composite graphite particle (C)

The orientation parameter intensity ratio I(110)/I(004) of the composite graphite particle (C) is usually 0.057 or less, preferably 0.056 or less, more preferably 0.05 or less, even more preferably 0.04 or less, especially preferably 0.03 or less. The ratio I(110)/I(004) thereof is usually larger than 0, preferably 0.001 or larger, more preferably 0.005 or larger, even more preferably 0.01 or larger, especially preferably 0.015 or larger, most preferably 0.02 or larger. In cases when the orientation parameter intensity ratio thereof is within that range in the invention, the graphene planes of the multiple particles of the folded graphite (A) which contain the metallic particle (B) embedded therein have been disposed so as to be parallel with the electrode surface. It is therefore thought that when the metallic particle (B) undergo volume expansion, the soft graphene layers expand and contract in parallel with the electrode surface to thereby buffer (mitigate) the expansion, and that the composite graphite particle (C) are hence less apt to suffer the disintegration or conduction path breakage due to volume expansion.

Incidentally, the porosity is calculated using the following areas, which can be measured when a section of one particle is examined with an SEM.

Porosity = (area of portions where neither graphite nor Si is present within the one graphite particle in SEM examination of the section)/(overall area of the one graphite particle)

The orientation parameter intensity ratio I(110)1I(004) is determined by the measuring method described in the Examples. However, the specimen to be examined may be either a negative-electrode material which has not been applied to an electrode or the negative-electrode material which constitutes the negative electrode taken out of a battery that has undergone charge/discharge. As an orientation parameter intensity ratio, I(110)/I(002) may be used.

<Process for producing Composite graphite particle (C) for nonaqueous-secondary-battery negative electrode>

Processes for producing the composite graphite particle (C) for nonaqueous-secondary-battery negative electrode in this description are not particularly limited so long as composite graphite particle (C) having the properties described above can be obtained. It is, however, preferred to use a production process including at least the following step 1 and step 2.

Step 1: Step in which a mixture including at least a graphite (A) and metallic particle (B) capable of alloying with Li is obtained
Step 2: Step in which mechanical energy is given to the mixture obtained in step 1 and a rounding treatment is thereby given to the mixture

The production process of the invention is explained below in detail.

(Step 1: Step in which mixture including at least graphite (A) and metallic particle (B) capable of alloying with Li is obtained)

Examples of the state of the mixture to be obtained in this step include powder particles, solidified mass, agglomerates, and slurry. It is, however, preferable from the standpoint of handleability that the mixture should be agglomerates.

The proportion of the metallic particle (B) to the sum of the graphite (A) and the metallic particle (B) is usually 1% by mass or higher, preferably 3% by mass or higher, more preferably 5% by mass or higher, even more preferably 7% by mass or higher. Meanwhile, the proportion thereof is usually 95% by mass or less, preferably 90% by mass or less, more preferably 80% by mass or less, even more preferably 70% by mass or less. Proportions thereof within that range are preferred from the standpoint that a sufficient capacity can be obtained.

In this step, fine carbon particles may be mixed in order to improve the electrical conductive properties of the composite graphite particle (C), or a polymer or carbon precursor which contains one or more nitrogen atoms may be mixed in order to inhibit the metallic particle (B) from reacting with nonaqueous electrolytic solutions. Furthermore, a resin or the like may be mixed as a pore-forming material in order to mitigate the breakage of the composite graphite particle due to the expansion/contraction of the metallic particle (B).

In the case where materials other than the graphite (A) and metallic particle (B) are mixed, the proportion of the other materials to the sum of the graphite (A), the metallic particle (B), and the other materials is usually 0.1% by mass or higher, preferably 0.3% by mass or higher, more preferably 0.5% by mass or higher, even more preferably 0.7% by mass or higher. Meanwhile, the proportion thereof is usually 30% by mass or less, preferably 28% by mass or less, more preferably 26% by mass or less, even more preferably 25% by mass or less. Proportions thereof within that range are preferred from the standpoint that a sufficient capacity can be obtained.

In this step, there are no particular limitations on methods for mixing a graphite (A), metallic particle (B) capable of alloying with Li, and other materials, so long as a mixture including the graphite (A) and the metallic particle (B) is obtained.

Use may be made of a mixing method in which a graphite (A), metallic particle (B) capable of alloying with Li, and other materials are introduced en bloc and mixed together or a method in which these ingredients are introduced sequentially while being mixed.

Examples of preferred methods for obtaining a mixture include a method in which metallic particle (B) in a wet state are used and mixed with a graphite (A) in such a manner that the metallic particle (B) do not dry.

As the wet-state metallic particle (B), the above-described metallic particle (B) produced by a wet process may be used as such. Alternatively, metallic particle (B) produced by a dry process may be dispersed in and wetted by a dispersion solvent before being mixed with a graphite (A), or may be wetted by mixing the metallic particle (B) with other materials dissolved in a solvent, etc.

Since the metallic particle (B) which have been thus rendered wet are inhibited from agglomerating, the metallic particle (B) can be evenly dispersed when mixed and are easily fixed to the surface of the graphite (A). Use of such wet metallic particle (B) is hence preferred.

The dispersion solvent which was used for wet pulverization of metallic particle (B) may be added in excess during the mixing, from the standpoint that the addition thereof enables the metallic particle (B) to be evenly dispersed on the surface of the graphite (A).

In this description, in the case where metallic particle (B) in a slurry form are mixed with a graphite (A), the solid content of the metallic particle (B) is usually 10% or higher, preferably 15% or higher, more preferably 20% or higher, and is usually 90% or less, preferably 85% or less, more preferably 80% or less. In case where the solid content thereof is too high, the slurry shows no flowability and the metallic particle (B) tend to be difficult to disperse on the graphite (A). In case where the solid content thereof is too low, this slurry tends to be difficult to handle in the step.

It is preferable that after the mixing, the dispersion solvent should be vaporized and removed using an evaporator, dryer, etc. to dry the mixture, thereby fixing the metallic particle (B) to the surface of the graphite (A). Alternatively, it is preferable that the ingredients should be mixed as such in a high-speed agitator while heating the mixture and vaporizing the dispersion solvent, without adding a dispersion solvent in excess, to thereby fix the metallic particle (B) to the graphite (A).

The timing of mixing other materials in order to obtain a mixture is not particularly limited. For example, the other materials may be added when a graphite (A) and metallic particle (B) are mixed together, or the other materials may be added to either metallic particle (B) in a wet state or a slurry of metallic particle (B). Furthermore, the other materials may be added when metallic particle (B) are wet-pulverized. With respect to the state of the other materials which are being mixed, these materials may be powders or solutions obtained by dissolving the materials in a solvent. However, solutions are preferred from the standpoint that such materials can be evenly dispersed.

It is thought that the carbon precursor, the polymer containing nitrogen atoms, and the resin as a pore-forming material, among those other materials, not only serve to fix the metallic particle (B) to the graphite (A) but also serve to prevent the metallic particle (B) from shedding from the graphite (A) during the rounding step.

A more preferred mixture among those described above is obtained by mixing a graphite (A), metallic particle (B), and a polymer containing nitrogen atoms. In a more preferred combination of steps for obtaining this mixture, a slurry of the metallic particle (B) is mixed with a polymer containing nitrogen atoms which has been dissolved in a solvent and the resultant mixture is mixed with the graphite (A). This is because the graphite (A), the metallic particle (B), and the polymer containing nitrogen atoms can be evenly dispersed in the mixture. In this operation, a carbon precursor may be further mixed as another material because the addition thereof is effective in reducing reactivity between the metallic particle (B) and electrolytic solutions, or a resin may be mixed as a pore-forming material in order to mitigate the breakage of the composite graphite particle due to the expansion/contraction of the metallic particle (B).

Usually, the mixing is conducted at ordinary pressure. If desired, however, the mixing may be conducted at a reduced pressure or elevated pressure. The mixing can be conducted either batchwise or continuously. In either case, the efficiency of mixing can be improved by using a device suitable for coarse mixing and a device suitable for precise mixing, in combination. A device for simultaneously performing mixing and fixing (drying) may be utilized. The drying may be usually conducted at a reduced pressure or elevated pressure, but it is preferred to dry the mixture at a reduced pressure.

The period of drying is usually 5 minutes or longer, preferably 10 minutes or longer, more preferably 20 minutes or longer, even more preferably 30 minutes or longer, and is usually 2 hours or less, preferably 1.5 hours or less, more preferably 1 hour or less. Too long periods tend to result in a cost increase, while too short periods tend to result in difficulties in even drying.

Temperatures for the drying vary depending on the solvent. It is, however, preferred to use a period with which that period can be rendered possible.

It is also preferred to use a temperature not higher than temperatures at which the resin used as one of other materials does not alter.

As mixing devices for the batch mixing, use may be made of: a mixer having a structure wherein two frames each are revolved while rotating on its own axis; a device having a structure wherein one blade performs agitation and dispersing within a tank, such as a dissolver which is a high-speed high-shear mixer or a butterfly mixer for high viscosity; a so-called kneader type device having a structure wherein a stirring blade of the sigma type or the like is rotated along the sidewall of a semicylindrical mixing vessel; a device of the tri-mixing type which includes stirring blades arranged on three axes; a device of the so-called bead mill type which includes a rotating disk and a dispersion solvent medium both disposed in a vessel; and the like.

Also usable are: a device having a structure which includes a vessel equipped inside with a plurality of paddles rotated by shafts and in which the inner wall surface of the vessel has been formed substantially along the outer periphery of the rotating paddles preferably in a long double-barrel shape and the paddles have been arranged in pairs along the axial directions of the shafts so that the opposed surfaces of each pair of paddles occlude slidably (e.g., KRC Reactor and SC Processor both manufactured by Kurimoto, Ltd., TEM, manufactured by Toshiba Machine Celmac, and TEX-K, manufactured by The Japan Steel Works, Ltd.); and a device (external heating type) having a structure which includes a vessel equipped with one shaft inside and with a plurality of plow-shaped or serrate paddles fixed to the shaft so as to be disposed in different phases and in which the inner wall surface thereof has been formed substantially along the outer periphery of the rotating paddles preferably in a cylindrical shape (e.g., Lödige Mixer, manufactured by Lödige GmbH, Flow Shear Mixer, manufactured by Pacific Machinery & Engineering Co., Ltd., and DT Dryer, manufactured by Tsukishima Kikai Co., Ltd.). In the case where the mixing is conducted continuously, use may be made of a pipeline mixer, a continuous bead mill, or the like. It is also possible to homogenize the mixture by ultrasonic dispersion treatment or another means.

The mixture part obtained in this step may be suitably subjected to powder processing such as pulverization, disaggregation, and classification.

Devices for use in the pulverization or disaggregation are not particularly limited. Examples of crushers include a shearing mill, jaw crusher, impact crusher, and cone crusher, and examples of intermediate pulverizers include a roll crusher and a hammer mill. Examples of pulverizers include a ball mill, vibrating mill, pin mill, agitation mill, and jet mill.

Devices for use in the classification are not particularly limited. For example, in the case of dry sieving, use can be made of a rotary sieve, rocking sieve, swinging sieve, oscillation sieve, or the like. In the case of dry air classification, use can be made of a gravity classifier, inertial classifier, or centrifugal classifier (classifier, cyclone, etc.). For wet sieving, use can be made of a mechanical wet classifier, hydraulic classifier, sedimentation classifier, centrifugal wet classifier, or the like.

(Step 2: Step in which mechanical energy is given to mixture obtained in step 1 and rounding treatment is given thereto)

Through this step 2, the composite graphite particle (C) for nonaqueous-secondary-battery negative electrode of the invention can be produced.

Namely, a process for producing the composite graphite particle (C) of the invention is to give a rounding treatment to the mixture obtained in step 1 above, which contains the metallic particle (B) present on the surface of the graphite (A) in an unfolded state (in this description, referred to also as "mixture"). However, it is especially preferred to suitably set production conditions such as those which will be described later, so that the metallic particle (B) are made to be present in interstices within the folded structure in an amount within a given range.

As the rounding treatment, a treatment which basically utilizes mechanical energy (a mechanical action such as impact compression, friction, shear force, etc.) is performed. Specifically, a treatment with a hybridization system is preferred. This system includes a rotor having a large number of blades which impose a mechanical action such as impact compression, friction, shear force, etc. In this system, a strong air stream is generated by the rotation of the rotor, and great centrifugal force is thereby applied to the graphite (A) present in the mixture obtained in step 1. The particles of the graphite (A) in the mixture obtained in step 1 hence collide with each other and with the wall and the blades. As a result, the graphite (A) in the mixture obtained in step 1 can be neatly folded.

For the rounding treatment, use can be made, for example, of a device which has a rotor including a casing and a large number of blades disposed within the casing and in which the rotor is rotated at a high speed to thereby exert a mechanical action, e.g., impact compression, friction, shear force, etc., on the graphite contained in the mixture which was obtained in step 1 and has been introduced into the casing, thereby performing a surface treatment. Examples thereof include methods such as a dry-process ball mill, wet-process bead mill, planetary ball mill, vibrating ball mill, Mechanofusion System, Agglomaster (Hosokawa Micron Corp.), Hybridization System, Micros, Miralo (Nara Machinery Co., Ltd.), CF Mill (Ube Industries, Ltd.), and θ-Composer (Tokuju Kosakusho Co., Ltd.). Examples of preferred devices among these include a dry-process ball mill, wet-process bead mill, planetary ball mill, vibrating ball mill, Mechanofusion System, Agglomaster (Hosokawa Micron Corp.), Hybridization System, Micros, Miralo (Nara Machinery Co., Ltd.), CF Mill (Ube Industries, Ltd.), θ-Composer (Tokuju Kosakusho Co., Ltd.), and pulverizer. Especially preferred of these is Hybridization System, manufactured by Nara Machinery Co., Ltd.

Incidentally, the graphite (A) in the mixture which was obtained in step 1 and is to be subjected to the rounding treatment may be one which has undergone a certain rounding treatment under conventional conditions. Furthermore, the composite obtained in step 1 may be subjected multiple times to circulation or this step to thereby repeatedly exert a mechanical action thereto.

Although such a device is used to conduct the rounding treatment, the rotation speed of the rotor in this treatment is regulated to a value which is usually 2,000 rpm or higher, preferably 4,000 rpm or higher, more preferably 5,000 rpm or higher, even more preferably 6,000 rpm or higher, especially preferably 6,500 rpm or higher, and is usually 9,000 rpm or less, preferably 8,000 rpm or less, more preferably 7,500 rpm or less, even more preferably 7,200 rpm or less. This rounding treatment is conducted for a period which is usually 30 seconds or longer, preferably 1 minute or longer, more preferably 1 minute and 30 seconds or longer, even more preferably 2 minutes or longer, especially preferably 2 minutes and 30 seconds or longer, and is usually 60 minutes or less, preferably 30 minutes or less, more preferably 10 minutes or less, even more preferably 5 minutes or less.

In case where the rotation speed of the rotor is too low, the treatment for rounding is weak and there is a possibility that the tap density might not increase sufficiently. Meanwhile, in case where the rotation speed thereof is too high, there is a possibility that the effect of pulverization might be stronger than the treatment for rounding and particle disintegration might occur, resulting in a decrease in tap density. Furthermore, in case where the period of the rounding treatment is too short, it is impossible to attain a high tap density while sufficiently reducing the particle diameter. Meanwhile, in case where the period thereof is too long, there is a possibility that the graphite (A) in the mixture obtained in step 1 might be powdered undesirably, making it impossible to achieve the object of the invention.

The composite graphite particle (C) obtained may be subjected to classification. In cases when the composite graphite particle (C) obtained have properties which are outside the range specified in the invention, the composite graphite particle (C) can be made to have properties within the desired range by repeatedly conducting classification (usually two to ten times, preferably two to five times). Examples of the classification include dry classification (air classification and sieves) and wet classification. However, dry classification, in particular, air classification, is preferred from the standpoints of cost and production efficiency.

By the production process described above, the composite graphite particle (C) of the invention can be produced.

<Carbonaceous-Substance-Coated Composite graphite particle>

Although the composite graphite particle (C) for nonaqueous-secondary-battery negative electrode for use in the invention is obtained in the manner described above, it is preferable that the composite graphite particle (C) should include a carbonaceous substance. A more specific and more preferred embodiment is to coat at least some of the surface thereof with a carbonaceous substance (hereinafter referred to also as carbonaceous-substance-coated composite graphite particle).

In this description, such carbonaceous-substance-coated composite graphite particle are distinguished for convenience from the composite graphite particle (C). However, the carbonaceous-substance-coated composite graphite particle also are construed as included in the composite graphite particle (C).

(Process for producing Carbonaceous-Substance-Coated Composite graphite particle)

The carbonaceous-substance-coated composite graphite particle can be produced through the following step 3 after step 2 described above.

Step 3: Step in which the composite graphite particle which have undergone the rounding treatment in step 2 are coated with a carbonaceous substance

Step 3 is explained below in detail.

(Step 3: Step in which the composite graphite particle which have undergone rounding treatment in step 2 are coated with carbonaceous substance)

• Carbonaceous Substance

Examples of the carbonaceous substance include amorphous carbon and graphitized carbon, depending on a difference in the temperature at which heating is conducted in the process for production thereof that will be described later. Of these, amorphous carbon is preferred from the standpoint of lithium ion acceptance properties.

Specifically, the carbonaceous substance can be obtained by heat-treating a carbon precursor therefor in the manner which will be described later. As the carbon precursor, it is preferred to use any of the carbon precursors explained above in the section Other Materials.

• Coating Treatment

In a coating treatment, a carbon precursor for obtaining a carbonaceous substance is used as a starting material for coating and mixed with the composite graphite particle obtained in step 2 described above, and the mixture is burned, thereby obtaining a coated graphite.

Amorphous carbon is obtained as the carbonaceous substance in cases when the burning temperature is usually 600°C or higher, preferably 700°C or higher, more preferably 900°C or higher, and is usually 2,000°C or lower, preferably 1,500°C or lower, more preferably 1,200°C or lower. Meanwhile, in cases when the heat treatment is conducted at a burning temperature which is usually 2,000°C or higher, preferably 2,500°C or higher, and is usually 3,200°C or lower, graphitized carbon is obtained as the carbonaceous substance. The amorphous carbon is carbon having low crystallinity, while the graphitized carbon is carbon having high crystallinity.

In the coating treatment, the composite graphite particle (C) described above and the carbon precursor for obtaining a carbonaceous substance are used respectively as a core material and a starting material for coating, and these materials are mixed together and burned. Thus, carbonaceous-substance-coated composite graphite particle are obtained.

• Mixing with Metallic particle (B) and with Fine Carbon Particles

Metallic particle (B) and the fine carbon particles explained above in the section Other Materials may be contained in the coating layer.

• Other Steps

The carbonaceous-substance-coated composite graphite particle obtained through the step described above may be subjected to the powder processing described in step 1, e.g., pulverization, disaggregation, and classification.

By the production process described above, the carbonaceous-substance-coated composite graphite particle of the invention can be produced.

(Properties of the Carbonaceous-Substance-Coated Composite graphite particle)

The carbonaceous-substance-coated composite graphite particle may show the same properties as the composite graphite particle described above. However, preferred properties of the carbonaceous-substance-coated composite graphite particle are shown below, the properties having been changed especially through the coating treatment.

• (002)-Plane Interplanar Spacing ($d_{002}$)

The (002)-plane interplanar spacing ($d_{002}$), determined by wide-angle X-ray diffractometry, of the carbonaceous-substance-coated composite graphite particle is usually 0.336 nm or larger, preferably 0.337 nm or larger, more preferably 0.340 nm or larger, preferably 0.342 nm or larger. The (002)-plane interplanar spacing thereof is usually less than 0.380 nm, preferably 0.370 nm or less, more preferably 0.360 nm or less. That the value of $d_{002}$ is too large shows that the coated particles have low crystallinity and tend to result in a decrease in cycling characteristics. In case where the value of $d_{002}$ is too small, it is difficult to obtain the effect of compositing with the carbonaceous substance.

• Surface Coverage

Although the carbonaceous-substance-coated composite graphite particle are ones in which the composite graphite particle have been coated with amorphous carbon or graphitic carbon, it is preferable that the composite graphite particle should have been coated with amorphous carbon among these, from the standpoint of lithium ion acceptance properties. The surface coverage therewith is usually 0.5% or higher, preferably 1% or higher, more preferably 3% or higher, even more preferably 4% or higher, especially preferably 5% or higher, most preferably 6% or higher, and is usually 30% or less, preferably 25% or less, more preferably 20% or less, even more preferably 15% or less, especially preferably 10% or less, most preferably 8% or less. In case where the content thereof is too high, the negative-electrode material contains the amorphous carbon portion in too large a proportion and this tends to give an assembled battery having a reduced reversible capacity. In case where the content thereof is too low, not only the core graphite particles have not been evenly coated with the amorphous carbon portion but also the particles formed are not strong. These particles hence tend to come to have too small a particle diameter upon pulverization after burning.

Incidentally, the content of (surface coverage with) the carbonization product derived from an organic compound, in the finally obtained carbon material for electrodes, can be calculated using the following expression 2 from the amount of the raw carbon material used, the amount of the organic compound, and the carbon residue determined by the micro method according to JIS K 2270-02 (2009).

Expression 2

$$\text{Surface coverage with carbonization product derived from organic compound (\%)} =$$
$$[(\text{mass of organic compound}) \times (\text{carbon residue}) \times 100] / \{(\text{mass of raw carbon material}) + [(\text{mass of organic compound}) \times (\text{carbon residue})]\}$$

<Other Mixtures>

Although the composite graphite particle (C) of the invention by themselves can be used as an active material for nonaqueous-secondary-battery negative electrode, it is also preferable that carbonaceous particles which are one or more materials selected from the group consisting of natural graphites, artificial graphites, vapor-growth-process carbon fibers, conductive carbon black, carbonaceous-substance-coated graphites, resin-coated graphites, amorphous carbon, products obtained by subjecting these materials to suitable treatments, and the like and which differ in shape or property from the composite graphite particle (C) should be further incorporated to obtain an active material for nonaqueous-secondary-battery negative electrode. It is more preferred to obtain an active material for nonaqueous-secondary-battery negative electrode which includes both the composite graphite particle (C) of the invention and one or more members selected from the group consisting of natural graphites, artificial graphites, carbonaceous-substance-coated graphites, resin-coated graphites, and amorphous carbon, among those.

By suitably selecting and mixing the carbonaceous particles differing in shape or property, not only an improvement in electrical conductive property can be attained, making it possible to improve cycling characteristics, improve charge acceptance properties, and reduce irreversible capacity, but also an improvement in reliability can be attained.

The proportion of the composite graphite particle (C) to the sum of the composite graphite particle (C) and the carbonaceous particles differing in shape or property is usually 1% by mass or higher, preferably 1.5% by mass or higher, more preferably 2% by mass or higher, even more preferably 2.5% by mass or higher. Meanwhile, the proportion thereof is usually 99% by mass or less, preferably 95% by mass or less, more preferably 90% by mass or less, even more preferably 85% by mass or less.

In case where the amount of the composite graphite particle (C) is too large, there is a possibility that the volume expansion which accompanies charge/discharge might be enhanced and a considerable deterioration in capacity might occur. Meanwhile, in case where the amount of the composite graphite particle is too small, a sufficient capacity tends to be unobtainable.

As the natural graphites, among those materials for use as the carbonaceous particles differing in shape or property, use can be made, for example, of a highly purified flake graphite or a rounded graphite.

As the artificial graphites, use can be made, for example, of particles obtained by burning and graphitizing either particles obtained by compositing a coke powder or natural graphite with a binder or particles of a single graphite precursor while keeping the powder state thereof.

As the carbonaceous-substance-coated graphites, use can be made, for example, of particles obtained by coating a natural graphite or an artificial graphite with a precursor for the carbonaceous substance and burning the coated graphite and particles obtained by coating the surface of a natural graphite or artificial graphite with a carbonaceous substance.

As the resin-coated graphites, use can be made, for example, of particles obtained by coating a natural graphite or an artificial graphite with a polymeric material and drying the coated graphite, and the like. As the amorphous carbon, use can be made, for example, of particles obtained by burning bulk mesophase and particles obtained by rendering a carbonaceous-substance precursor infusible and burning this precursor.

<Negative Electrode for nonaqueous secondary battery>

For producing a negative electrode using the active material for nonaqueous-secondary-battery negative electrode, which includes the composite graphite particle (C) according to the invention, use may be made of a method in which a mixture obtained by adding a binder resin to the active material for nonaqueous-secondary-battery negative electrode is slurried with water or an organic solvent and this slurry, optionally after a thickener is added thereto, is applied to a current collector and dried.

As the binder resin, it is preferred to use a binder resin which is stable to the nonaqueous electrolytic solution and is water-insoluble. For example, use can be made of: rubbery polymers such as styrene/butadiene rubbers, isoprene rubbers, and ethylene/propylene rubbers; synthetic resins such as polyethylene, polypropylene, poly(ethylene terephthalate), and aromatic polyamides; thermoplastic elastomers such as styrene/butadiene/styrene block copolymers and products of hydrogenation thereof, styrene/ethylene/butadiene/styrene copolymers, styrene/isoprene/styrene block copolymers, and products of hydrogenation thereof; flexible resinous polymers such as syndiotactic 1,2-polybutadiene, ethylene/vinyl acetate copolymers, and copolymers of ethylene and an $\alpha$-olefin having 3-12 carbon atoms; fluorinated polymers such as polytetrafluoroethylene/ethylene copolymers, poly(vinydene fluoride), polypentafluoropropylene, and polyhexafluoropropylene; and the like. Examples of the organic medium include NMP and DMF.

The binder resin may be used in an amount of preferably 0.1% by mass or larger, more preferably 0.2% by mass or larger, based on the active material for nonaqueous-secondary-battery negative electrode. By regulating the proportion of the binder resin to 0.1% by mass or larger based on the active material for nonaqueous-secondary-battery negative electrode, the binding power between the particles of the active material for nonaqueous-secondary-battery negative electrode and the binding power between the composite graphite particle and a current collector are rendered sufficient. Thus, the active material for nonaqueous-secondary-battery negative electrode can be prevented from shedding from the negative electrode and from thereby causing a decrease in battery capacity and a deterioration in cycling characteristics. It is preferable that the binder resin should be used in an amount of up to 10% by mass, preferably 7% by mass or less, based on the composite graphite particle.

As the thickener to be added to the slurry, use may be made of a water-soluble cellulose derivative such as carboxymethyl cellulose, methyl cellulose, hydroxyethyl cellulose, and hydroxypropyl cellulose, poly(vinyl alcohol), polyethylene glycol, and the like. Preferred of these is carboxymethyl cellulose. The thickener may be used in an amount of preferably 0.2-10% by mass, more preferably 0.5-7% by mass, based on the composite graphite particle.

As the negative-electrode current collector, use may be made of a material conventionally known to be usable in this application, such as copper, a copper alloy, stainless steel, nickel, titanium, or carbon. The shape of the current collector is usually a sheet shape. It is also preferred to use a current collector having a rugged surface, a net, a punching metal, or the like.

It is preferable that after the slurry of both the active material for nonaqueous-secondary-battery negative electrode and a binder resin has been applied to a current collector and dried, the coated current collector should be pressed to heighten the density of the negative-electrode active-material layer formed on the current collector and to thereby increase the battery capacity per unit volume of the negative-electrode active-material layer. The density of the negative-electrode active-material layer is preferably 1.2 g/cm$^3$ or higher, more preferably 1.3 g/cm$^3$ or higher, and is preferably 1.9 g/cm$^3$ or less, more preferably 1.8 g/cm$^3$ or less. By regulating the density of the negative-electrode active-material layer to 1.2 g/cm$^3$ or higher, a decrease in battery capacity due to an increase in electrode thickness can be prevented. By regulating the density of the negative-electrode active-material layer to 1.8 g/cm$^3$ or less, the electrode can be prevented from decreasing in the amount of interstices among the particles and from thereby reducing the quick charge/discharge characteristics because of the resultant decrease in the amount of the electrolytic solution held in the interstices and because of the resultant decrease in the movability of alkali ions, e.g., lithium (Li) ions.

<Nonaqueous Secondary Battery>

The nonaqueous secondary battery according to the invention can be produced by an ordinary method, except that the negative electrode described above is used. As a positive-electrode material, use may be made of a lithium/transition metal composite oxide such as the lithium-cobalt composite oxide having the basic composition represented by LiCoO$_2$, the lithium-nickel composite oxide represented by LiNiO$_2$, or a lithium-manganese composite oxide represented by LiMnO$_2$ or LiMn$_2$O$_4$, a transition metal oxide such as manganese dioxide, a mixture of these composite oxides, TiS$_2$, FeS$_2$, Nb$_3$S$_4$, Mo$_3$S$_4$, CoS$_2$, V$_2$O$_5$, CrO$_3$, V$_3$O$_3$, FeO$_2$, GeO$_2$, LiNi$_{0.33}$Mn$_{0.33}$Co$_{0.33}$O$_2$, or the like.

A mixture obtained by adding a binder resin to any of these positive-electrode materials is slurried with an appropriate solvent, and this slurry is applied to a current collector and dried. Thus, a positive electrode can be produced. It is preferred to incorporate a conductive material such as acetylene black or Ketjen Black into the slurry.

A thickener may be incorporated according to need. As the thickener and the binder resin, use may be made of ones known for use in this application. For example, those shown above as examples usable for producing the negative electrode may be used.

Ingredient proportions to the positive-electrode material are as follows. The proportion of the conductive material is usually 0.5-20% by mass, especially preferably 1-15% by mass. The proportion of the thickener is preferably 0.2-10% by mass, more preferably 0.5-7% by mass. The proportion of the binder resin, in the case of slurrying with water, is preferably 0.2-10% by mass, more preferably 0.5-7% by mass. In the case of slurrying with an organic solvent in which the binder resin dissolves, e.g., NMP, the proportion of the binder resin is preferably 0.5-20% by mass, more preferably 1-15% by mass.

As the positive-electrode current collector, use may be made of aluminum, titanium, zirconium, hafnium, niobium, tantalum, or the like or an alloy of these.

It is preferred to use aluminum, titanium, tantalum, or an alloy thereof, among those. Most preferred is to use aluminum or an alloy thereof.

As the electrolytic solution, use can be made of an electrolytic solution prepared by dissolving any of various lithium salts in a conventionally known nonaqueous solvent. As the nonaqueous solvent, use may be made of cyclic carbonates such as ethylene carbonate, fluoroethylene carbonate, propylene carbonate, butylene carbonate, and vinylene carbonate, chain carbonates such as dimethyl carbonate, ethyl methyl carbonate, and diethyl carbonate, cyclic esters such as $\gamma$-butyrolactone, cyclic ethers such as crown ethers, 2-methyltetrahydrofuran, tetrahydrofuran, 1,2-dimethyltetrahydrofuran, and 1,3-dioxolane, chain ethers such as 1,2-dimethoxyethane, and the like. Usually, some of these solvents are used in combination. In particular, it is preferred to use a cyclic carbonate and a chain carbonate in combination or to use these carbonates and one or more other solvents in combination.

A compound such as vinylene carbonate, vinylethylene carbonate, succinic anhydride, maleic anhydride, propanesultone, or diethyl sulfone or a difluorophosphoric acid salt such as lithium difluorophosphate may have been added. Furthermore, an overcharge inhibitor such as diphenyl ether or cyclohexylbenzene may have been added.

As the electrolyte to be dissolved in the nonaqueous solvent, use may be made of LiClO$_4$, LiPF$_6$, LiBF$_4$, LiCF$_3$SO$_3$, LiN(CF$_3$SO$_2$)$_2$, LiN(CF$_3$CF$_2$SO$_2$)$_2$, LiN(CF$_3$SO$_2$)(C$_4$F$_9$SO$_2$), LiC(CF$_3$SO$_2$)$_3$, or the like. The concentration of the electrolyte in the electrolytic solution is usually 0.5-2 mol/L, preferably 0.6-1.5 mol/L.

As a separator to be interposed between the positive electrode and the negative electrode, it is preferred to use a porous sheet or nonwoven fabric made of a polyolefin such as polyethylene or polypropylene.

It is preferable that the nonaqueous secondary battery according to the invention should be designed to have a negative-electrode/positive-electrode capacity ratio of 1.01-1.5, more preferably 1.2-1.4.

It is preferable that the nonaqueous secondary battery should be a lithium ion secondary battery comprising a positive electrode and a negative electrode that are capable of occluding and releasing lithium ions and with an electrolyte.

Examples

Embodiments of the invention will be explained below in detail by reference to Examples, but the invention should not be construed as being limited by the following Examples.

Volume-average particle diameter (d50), BET specific surface area, Si content of composite graphite particle, sectional structure of particles, presence ratio, etc. in this description were determined in the following manners.

• Average Particle Diameter d50: About 20 mg of a carbon powder was added to about 1 mL of a 2% (by volume) aqueous solution of polyoxyethylene(20) sorbitan monolaurate, and this mixture was dispersed in about 200 mL of ion-exchanged water. This dispersion was examined for volume-based particle size distribution with a laser diffraction type particle size distribution analyzer (LA-920, manufactured by Horiba Ltd.) to determine the medium diameter (d50). The measuring conditions included an ultrasonic dispersion period of 1 minute, ultrasonic intensity of 2, circulation speed of 2, and relative refractive index of 1.50.
• BET Specific Surface Area: Measurement was made with TriStar II 3000, manufactured by Micromeritics Corp. After vacuum drying was conducted at 150°C for 1 hour, a measurement was made by the BET multipoint method based on nitrogen gas adsorption (five points in the relative-pressure range of 0.05-0.30).
• N/Si Value of Composite graphite particle (C)

The N/Si value of composite graphite particle (C) is determined by ray photoelectron spectroscopy using an X-ray photoelectron spectroscope. A specimen to be examined was placed on the sample stage so that the surface of the specimen was flat. The $K\alpha$ line of aluminum was used as an X-ray source to examine the specimen for spectrum with respect to N1s (390-410 eV), Si2p (95-115 eV), C1s (280-300 eV), O1s (525-545 eV), and S2p (160-175 eV) by a multiplex measurement. The energy for the peak top of the lower-energy-side Si2p peak obtained was taken as 99.5 eV to conduct charge correction, and the peak areas of the N1s, Si2p, C1s, O1s, and S2p spectra were determined. Furthermore, the peak areas were divided by the sensitivity coefficient of the apparatus to calculate the surface concentrations of N, Si, C, O, and S atoms. Thereafter, the ratio of the N atom concentration to Si atom concentration obtained, N/Si (N atom concentration/Si atom concentration), was defined as the surface functional-group amount N/Si value of the specimen.

$$\text{N/Si value (\%)} = \text{(N atom concentration determined from N1s spectrum peak area}$$
$$\text{in X-ray photoelectron spectroscopy (XPS))/(Si atom concentration determined from Si2p}$$
$$\text{spectrum peak area in XPS)} \times 100$$

Incidentally, in cases when the value of atomic concentration Si/(C+O+Si+S+N) was 0.01% or less, this value was not regarded as an N/Si value according to the invention because the specimen was an impurity derived from a graphite.

· Si Content of Composite graphite particle (C)

The Si content of composite graphite particle (C) was determined in the following manner. A specimen (composite graphite particle (C)) was completely fused with an alkali and then dissolved in water so that the solution had a given volume. This solution was examined with an inductively coupled plasma emission spectrometer (ULTIMA 2C; Horiba Ltd.), and the amount of Si was calculated from a calibration curve. Thereafter, the Si amount was divided by the weight of the composite graphite particle (C) to thereby calculate the Si content of the composite graphite particle (C).

· Si Presence Ratio of Composite graphite particle (C)

The Si presence ratio of composite graphite particle (C) was determined in the following manner. First, a cross-section of an electrode was processed using a cross-section polisher (IB-09020 CP; JEOL Ltd.). While the processed cross-section of the electrode was being examined with an SEM (SU-70; Hitachi High-Technologies Corp.), mapping of the graphite (A) and Si was performed using EDX. Incidentally, the SEM acquisition conditions included an accelerating voltage of 3 kV and a magnification of 2,000 diameters. Thus, an image having an area capable of acquisition of one particle was obtained at a resolution of 256 dpi. Thereafter, one composite graphite particle (C) was extracted, and the area (a) of the Si present in the particle was calculated. Next, image processing software "Image J" was used to binarize the extracted one particle and the background, which was the portion other than the one particle, and contraction processing was then repeatedly performed on the particle to extract a shape which had an area that was 70% of the area of the extracted particle. The area (b) of the Si present within the shape was calculated. A value obtained by dividing area (b) by area (a) was determined for each of any three particles. These values for the three particles were averaged, and the resultant average value was taken as the presence ratio of Si in the composite graphite particle (C).

· Tap Density of Composite graphite particle (C)

The tap density of composite graphite particle (C) was determined using a powder densimeter. A specimen was made to fall, through a sieve having an opening size of 300 $\mu$m, into a cylindrical tap cell having a diameter of 1.6 cm and a volume capacity of 20 cm$^3$, thereby filling up the cell. Thereafter, tapping was conducted 1,000 times, with the stroke being 10 mm. The density was determined from the resultant volume and the weight of the specimen.

· Orientation Parameter Intensity Ratio I(110)/I(004) of Composite graphite particle (C)

The orientation parameter intensity ratio I(110)/I(004) of composite graphite particle (C) was determined using an X-ray diffraction apparatus ("X' PertPro MPD", manufactured by PANalytical B.V). The measuring conditions were as follows. An electrode constituted of negative-electrode material particles having a density of 1.40 g·mL was set in a measuring cell, and a measurement was made with a focusing optical system over the 2$\theta$ range of 5-90 degrees. The integrated-intensity ratio between the graphite (110) plane and (004) plane was calculated as the orientation parameter intensity ratio I(110)/I(004).

In cases when the composite graphite particle (C) had a high Si content and a diffraction peak assigned to Si interfered with a diffraction peak assigned to the graphite, the two peaks were subjected to peak fitting using Pearson's coefficient and the diffraction peak assigned to Si was subtracted before the orientation parameter attributable to graphite was acquired.

· Burning Yield (%) of Polymer

The burning yield of a polymer to be used in the invention was determined in the following manner. A 10-g portion of a specimen was weighed out and placed in a vat, and this specimen was burned at 720°C for 1 hour in an N$_2$ atmosphere. Thereafter, the specimen was burned at 1,000°C for 1 hour in an N$_2$ atmosphere. The burned specimen was weighed.

The value of (weight of the burned specimen)/(weight of the unburned specimen)×100 was taken as the burning yield (%).

· Content of Nitrogen Atoms in Polymer (%)

The content of nitrogen atoms (%) in a polymer to be used in the invention was calculated using (molecular weight of the nitrogen atom(s) in the monomer of the smallest repeating unit of the polymer)/(molecular weight of all the atoms in the monomer of the smallest repeating unit of the polymer)×100.

<Example 1>

(Production of Composite graphite particle (C))

(Step 1)

First, polycrystalline Si having an average particle diameter d50 of 30 $\mu$m (manufactured by Wako Ltd.), as metallic particle (B), was pulverized with a bead mill (manufactured by Ashizawa Finetech Ltd.) to an average particle diameter d50 of 0.2 $\mu$m together with NMP (N-methyl-2-pyrrolidone), thereby preparing an Si slurry (I). Two hundred grams of this Si slurry (I) (solid content, 40%) was added, without being dried, to 750 g of NMP in which 60 g of polyacrylonitrile (burning yield, 37.74%; nitrogen content, 26.4%) had been evenly dissolved as a polymer containing nitrogen element. This mixture was stirred using a mixing stirrer (manufactured by Dalton Co., Ltd.) to thereby mix the Si compound particles with the polyacrylonitrile. Subsequently, 1,000 g of a natural flake graphite (average particle diameter d50, 45 $\mu$m) was introduced as a graphite (A) and mixed using the mixing stirrer to obtain a slurry (II) in which the polyacrylonitrile, the Si compound particles, and the graphite had been evenly dispersed. This slurry (II) was moderately dried at 150°C, which is lower than the heat decomposition temperature of the polyacrylonitrile, for 3 hours at a reduced pressure so that the polyacrylonitrile did not alter. Incidentally, analysis by TG-DTA revealed that the polyacrylonitrile had a decomposition temperature of 270 degrees. Subsequently, the mixture agglomerates obtained were disaggregated with a mill (manufactured by IKA GmbH) having a hammer head.

(Step 2)

The disaggregated mixture was introduced into Hybridization System (manufactured by Nara Machinery Co.,

Ltd.) and was caused to circulate or stagnate in the device for 180 seconds at a rotor rotation speed of 7,000 rpm to conduct a rounding treatment. Thus, composite graphite particle (C) which contained Si compound particles embedded therein was obtained.

(Step 3)

The composite graphite particle (C) obtained, which contained Si compound particles embedded therein, was mixed with coal-based heavy oil so as to result in a surface coverage after burning of 7.5%. The mixture was kneaded with a twin-screw kneader to disperse the particles. The dispersion obtained was introduced into a burning furnace and burned at 1,000°C for 1 hour in a nitrogen atmosphere. The burned agglomerates were disaggregated using the mill under the conditions of a rotation speed of 3,000 rpm and then classified with an oscillation sieve having an opening size of 45 $\mu$m. Thus, composite graphite particle (C) in which the graphite particles was coated with amorphous carbon were obtained.

The average particle diameter (d50), BET specific surface area, N/Si value, Si content, Si presence ratio, orientation parameter intensity ratio I(110)/I(004), and tap density of the composite graphite particle (C) obtained are shown in Table 1. An SEM image of a section of some of the composite graphite particles (C) is shown in Fig. 1.

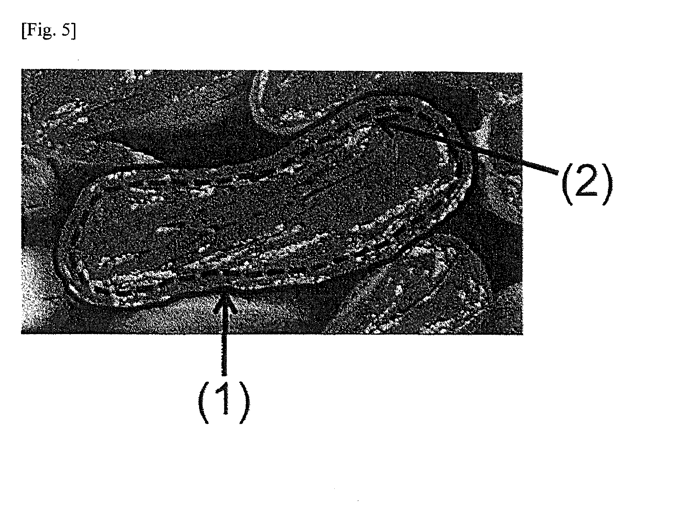

Furthermore, an example of the extraction of a shape for determining presence ratio is shown in Fig. 5.

The sectional structure was examined on the SEM image of the section. As a result, it was found that in the composite graphite particle (C), the natural flake graphite had a folded structure and that Si compound particles were present in interstices within the folded structure. Furthermore, it was observed that there were portions where Si compound particles were in contact with the natural flake graphite.

(Production of Battery for Performance Evaluation)

Using a hybridizing mixer, 97.5% by mass the composite graphite particle, 1% by mass carboxymethyl cellulose (CMC) as a binder, and 1.5% by mass 48% by mass aqueous dispersion of a styrene/butadiene rubber (SBR) were kneaded to obtain a slurry. This slurry was applied to a rolled copper foil having a thickness of 10 $\mu$m by the blade method so as to result in an application amount of 7-8 mg/cm$^2$, and dried.

Thereafter, the coated foil was pressed with a roller press having a diameter of 250 m and equipped with a load cell, so as to result in a negative-electrode active-material layer having a density of 1.4-1.5 g/cm$^3$. A piece of a circular shape having a diameter of 12.5 mm was punched out thereof and vacuum-dried at 110°C for 2 hours to obtain a negative electrode for evaluation. This negative electrode and an Li foil as a counter electrode were stacked together with, interposed therebetween, a separator impregnated with an electrolytic solution. Thus, a battery for a charge/discharge test was produced. As the electrolytic solution was used a solution obtained by dissolving LiPF$_6$ in an EC/EMC=3/7 (by mass) liquid mixture so as to result in a concentration of 1 mol/L.

(Initial Discharge Capacity and Charge/discharge Efficiency)

First, in the first cycle, the positive electrode and the negative electrode were charged to 5 mV at a current density of 0.2 mA/cm$^2$ and further charged at a constant voltage of 5 mV until the current value became 0.02 mA, thereby doping the negative electrode with lithium, and the positive electrode and the negative electrode were thereafter discharged to 1.5 V at a current density of 0.2 mA/cm$^2$.

The initial discharge capacity was determined in the following manner. First, the mass of a copper foil punched out so as to have the same area as the negative electrode was subtracted from the mass of the negative electrode to thereby determine the mass of the negative-electrode active material. The discharge capacity in the first cycle was divided by the mass of the negative-electrode active material to determine the initial discharge capacity per unit mass.

Subsequently, the battery was subjected to the second cycle, in which the positive electrode and the negative electrode were charged to 5 mV at a current density of 0.8 mA/cm$^2$ and further charged at a constant voltage of 5 mV until the current value became 0.08 mA, thereby doping the negative electrode with lithium, and the positive electrode and the negative electrode were thereafter discharged to 1.5 V at a current density of 0.8 mA/cm$^2$.

The battery was then subjected to the third cycle, in which the positive electrode and the negative electrode were charged to 5 mV at a current density of 0.8 mA/cm$^2$ and further charged at a constant voltage of 5 mV until the current value became 0.08 mA, thereby doping the negative electrode with lithium, and the positive electrode and the negative electrode were thereafter discharged to 1.5 V at a current density of 0.8 mA/cm$^2$.

With respect to each cycle, the value obtained by subtracting the discharge capacity from the charge capacity was taken as a loss. The charge/discharge efficiency was determined using the following expression 3.

The mass of the negative-electrode active material was determined by subtracting the mass of a copper foil punched out so as to have the same area as the negative electrode from the mass of the negative electrode.

Expression 3

$$\text{Charge/discharge efficiency (\%)} = \{(\text{discharge capacity after 3rd cycle (mAh/g)})/[(\text{discharge capacity in 3rd cycle (mAh/g)})+(\text{sum of the loses in 1st, 2nd, and 3rd cycles})]\}\times100$$

The initial discharge capacity and charge/discharge efficiency calculated here are shown in Table 1.

<Example 2>

The same procedure as in Example 1 was conducted, except that the amount of the Si slurry (I) (solid content, 40%) to be mixed was changed to 850 g in order to increase the Si content of the composite graphite particle. The properties of the composite graphite particle (C) obtained and the evaluation of the battery are shown in Table 1.

<Example 3>

The same procedure as in Example 1 was conducted, except that the amount of the Si slurry (I) (solid content, 40%) to be mixed was changed to 1,200 g in order to increase the Si content of the composite graphite particle. The properties of the composite graphite particle (C) obtained and the evaluation of the battery are shown in Table 1.

<Example 4>

The same procedure as in Example 1 was conducted, except that the average particle diameter d50 of the flake graphite was changed to 45 $\mu$m and the amount of the Si slurry (I) (solid content, 40%) to be mixed was changed to 50 g. The properties of the composite graphite particle (C) obtained and the evaluation of the battery are shown in Table 1.

<Example 5>

(Step 1)

First, polycrystalline Si having an average particle diameter d50 of 30 $\mu$m (manufactured by Wako Ltd.), as metallic particle (B), was pulverized with a bead mill (Ashizawa Finetech) together with NMP (N-methyl-2-pyrrolidone) to prepare an Si slurry (I) having an average particle diameter d50 of 0.2 $\mu$m. Five hundred grams of this Si slurry (I) (solid content, 40%) was added, without being dried, to 750 g of NMP in which 60 g of polyacrylonitrile had been evenly dissolved, and was mixed therewith using a mixing stirrer. Subsequently, 1,000 g of a natural flake graphite having an average particle diameter d50 of 45 $\mu$m was added and mixed therewith to obtain a slurry (II) in which the polyacrylonitrile, the Si compound particles, and the graphite had been evenly dispersed. This slurry (II) was moderately dried at 150°C, which is lower than the heat decomposition temperature of the polyacrylonitrile, for 3 hours at a reduced pressure so that the polyacrylonitrile did not alter. The agglomerates obtained were disaggregated with a hammer mill (MF10, manufactured by IKA GmbH) at a rotation speed of 6,000 rpm.

(Step 2)

The disaggregated mixture was introduced into Hybridization System (manufactured by Nara Machinery Co., Ltd.) and was caused to circulate or stagnate in the device for 180 seconds at a rotor rotation speed of 7,000 rpm to conduct a rounding treatment. Thus, composite graphite particle (C) were obtained.

(Step 3)

The composite graphite particle (C) obtained, which contained Si compound particles embedded therein, were mixed with coal-based heavy oil so as to result in a surface coverage after burning of 7.5%. The mixture was kneaded with a twin-screw kneader to disperse the particles. The dispersion obtained was introduced into a burning furnace and burned at 1,000°C for 1 hour in a nitrogen atmosphere. The burned agglomerates were disaggregated using the mill under the conditions of a rotation speed of 3,000 rpm and then classified with an oscillation sieve having an opening size of 45 $\mu$m. Thus, composite graphite particle (C) in which the graphite particles were coated with amorphous carbon were obtained. The properties of the composite graphite particle (C) obtained and the evaluation of the battery are shown in Table 1.

<Example 6>

The composite graphite particle (C) of Example 5 were mixed with spherical natural-graphite particles 1 (d50, 22.3 $\mu$m; tap density, 1.02 g/cm$^3$; BET specific surface area, 5.6 m$^2$/g; d$_{002}$, 0.3356 nm; degree of circularity, 0.92) so that the mixing ratio (composite graphite particle (C)):(spherical natural-graphite particles 1) was 30:70 (by mass). Thus, a mixture material was obtained. The evaluation of the battery of the mixture material obtained is shown in Table 1.

<Example 7>

The composite graphite particle (C) of Example 5 were mixed with spherical natural-graphite particles 2 (average particle diameter d50, 15.7 pm; tap density, 1.02 g/cm$^3$; BET specific surface area, 6.9 m$^2$/g; d$_{002}$, 0.3356 nm; degree of circularity, 0.93) so that the mixing ratio (composite graphite particle):(spherical natural-graphite particles 2) was 30:70 (by mass). Thus, a mixture material was obtained. The evaluation of the battery of the mixture material obtained is shown in Table 1.

<Example 8>

The composite graphite particle (C) of Example 5 were mixed with spherical natural-graphite particles 3 (average particle diameter d50, 11.0 $\mu$m; tap density, 0.94 g/cm$^3$; BET specific surface area, 8.8 m$^2$/g; d$_{002}$, 0.3356 nm; degree of circularity, 0.93) so that the mixing ratio (composite graphite particle):(spherical natural-graphite particles 3) was 30:70 (by mass). Thus, a mixture material was obtained. The evaluation of the battery of the mixture material obtained is shown in Table 1.

<Comparative Example 1>

The Si slurry (I) (solid content, 40%) was dried to obtain Si compound particles. Seventy grams of the Si compound particles were mixed with 930 g of a natural flake graphite (average particle diameter d50, 45 $\mu$m) by a dry process. Thereafter, a rounding treatment, mixing with coal tar pitch, and burning were conducted by the same procedures as in Example 1. The properties of the composite graphite particle obtained and the evaluation of the battery are shown in Table 1. An SEM image of a section of some of the composite graphite particle is shown in Fig. 2.

<Comparative Example 2>

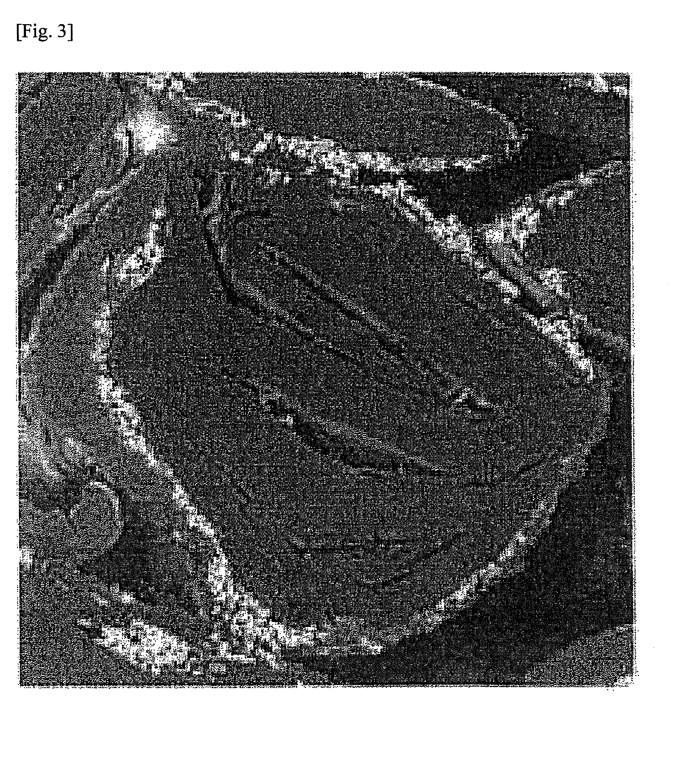

The Si slurry (I) (solid content, 40%) was dried to obtain Si compound particles. Eighty-five grams of the Si compound particles were mixed with 1,000 g of rounded graphite particles (average particle diameter d50, 16 $\mu$m). Thereafter, mixing with coal tar pitch and burning were conducted by the same procedures as in Example 1. The properties of the composite graphite particle obtained and the evaluation of the battery are shown in Table 1. An SEM image of a section of some of the composite graphite particles is shown in Fig. 3.

<Comparative Example 3>

The same procedure as in Comparative Example 2 was conducted, except that the amount of the Si compound particles was changed to 190 g.

<Comparative Example 4>

Seven grams of Si compound particles having an average particle diameter d50 of 0.5 $\mu$m, 78 g of a rounded graphite having an average particle diameter d50 of 5 $\mu$m, and 107 g of coal tar pitch were kneaded with a hybridizing mixer to disperse the particulate ingredients. The dispersion obtained was introduced into a burning furnace and burned at 1,000°C for 3 hours in a nitrogen atmosphere. The burning product obtained was crushed with a jaw crusher, subsequently pulverized with a hammer mill, and then sieved (45 $\mu$m) to produce composite graphite particle. The properties of the composite graphite particle obtained and the evaluation of the battery are shown in Table 1.

<Comparative Example 5>

The properties of the rounded graphite having an average particle diameter d50 of 16 $\mu$m and the evaluation of the battery are shown in Table 1.

<Comparative Example 6>

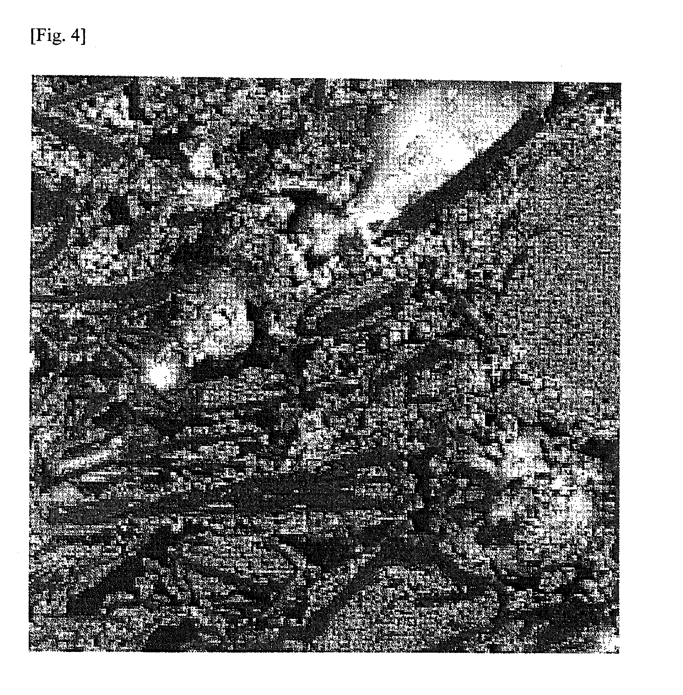

In order to examine influences exerted when the amount of introduced metallic particles was large, the Si slurry (I) (solid content, 40%) was dried to obtain Si compound particles. Four hundred grams of the Si compound particles were mixed with 600 g of a natural flake graphite (average particle diameter d50, 45 $\mu$m) by a dry process. Thereafter, a rounding treatment, mixing with coal tar pitch, and burning were conducted by the same procedures as in Example 1. The properties of the composite graphite particle obtained and the evaluation of the battery are shown in Table 1. An SEM image of a section of some of the composite graphite particle is shown in Fig. 4.

<Comparative Example 7>

In order to examine influences of the average particle diameter of a flake graphite which had not been rounded, composite particles were produced by the same procedure as in Comparative Example 1, except that the average particle diameter d50 of the natural flake graphite in Comparative Example 1 was changed to 6 $\mu$m and that the conditions for hybridization in Comparative Example 1 were changed so that the mixture was caused to circulate or stagnate in the device for 300 seconds at a rotor rotation speed of 7,000 rpm to conduct a rounding treatment. The properties of the particles obtained and the evaluation of the battery are shown in Table 1.

[Table 1]

Table 1

| | Presence ratio | Folded structure | Si content (mass%) | Tap density (g/cm$^3$) | Average particle diameter d50 ($\mu$m) | BET specific surface area (m$^2$/g) | I(110)/I(004) | N/Si value (%) | Initial charge capacity (mAh/g) | Charge/discharge efficiency (%) |
|---|---|---|---|---|---|---|---|---|---|---|
| Example 1 | 0.72 | present | 7.7 | 1.09 | 20 | 12 | 0.022 | 1.2 | 585 | 86.9 |
| Example 2 | 0.75 | present | 12.5 | 1.07 | 20 | 13 | 0.037 | 0.6 | 722 | 86.1 |
| Example 3 | 0.68 | present | 17.4 | 1.02 | 23 | 11 | 0.039 | 0.3 | 850 | 85.6 |
| Example 4 | 0.23 | present | 2.0 | 1.01 | 21 | 7 | 0.016 | 6.8 | 422 | 83.1 |
| Example 5 | 0.70 | present | 16.3 | 1.10 | 21 | 13 | - | - | 816 | 83.7 |
| Example 6 | 0.70 | present | 16.3 | - | - | - | - | - | 503 | 86.9 |
| Example 7 | 0.70 | present | 16.3 | - | - | - | - | - | 508 | 87.6 |
| Example 8 | 0.70 | present | 16.3 | - | - | - | - | - | 512 | 86.4 |
| Comparative Example 1 | 0.30 | absent | 4.7 | 0.75 | 14 | 6 | 0.032 | 0.1 | 501 | 82.5 |
| Comparative Example 2 | 0.19 | present | 6.5 | 1.05 | 18 | 8 | 0.049 | 0.5 | 589 | 81.0 |
| Comparative Example 3 | 0.17 | present | 14.0 | 1.03 | 18 | 8 | 0.048 | 0.3 | 700 | 61.1 |
| Comparative Example 4 | 0.15 | present | 6.3 | 0.84 | 12 | 4 | 0.058 | 0 | 520 | 80.6 |
| Comparative Example 5 | 0 | present | 0 | 0.97 | 16 | 5 | 0.076 | -*1 | 365 | 94.0 |
| Comparative Example 6 | -*2 | present | 31.3 | 0.68 | 7 | 15 | 0.028 | 0.1 | 1145 | 29.9 |
| Comparative Example 7 | 0.09 | present | 14.5 | 0.75 | 7 | 10 | 0.019 | 0.3 | 807 | 64.4 |

*1 Not determined because the value of atomic concentration Si/(C+O+Si+S+N) was 0.01% or less.
*2 Not determined because most of the composite particles had broken or split clearly.

EP 2 899 782 A1

As shown in Table 1, it was ascertained that the composite graphite particle (C) of the invention were excellent in terms of initial charge capacity and charge/discharge efficiency.

The reason for these excellent properties is thought to be as follows. Since the composite graphite particle (C) were produced through step 1 and step 2, the Si compound was able to be efficiently embedded within interstices of the natural flake graphite particles in which the graphite (A) was folded. Consequently, the Si compound is inhibited from suffering the shedding from the graphite due to volume expansion and from thereby causing conduction path breakage.

It was also ascertained that the active materials for nonaqueous-secondary-battery negative electrode (Examples 6 to 8) which included both composite graphite particle (C) and spherical natural-graphite particles show a higher charge/discharge efficiency than the active material for nonaqueous-secondary-battery negative electrode (Example 5) which employs composite graphite particle (C) only. This is thought to be because the spherical natural-graphite particles enter the interstices among the composite graphite particle (C) to thereby improve contact between the particles and inhibit the conduction paths from breaking.

While the invention has been described in detail and with reference to specific embodiments thereof, it will be apparent to one skilled in the art that various changes and modifications can be made therein without departing from the spirit and scope thereof

This application is based on a Japanese patent application filed on September 19, 2012 (Application No. 2012-206107), a Japanese patent application filed on September 19, 2012 (Application No. 2012-206108), a Japanese patent application filed on March 19, 2013 (Application No. 2013-057196), and a Japanese patent application filed on July 18, 2013 (Application No. 2013-149597), the contents thereof being incorporated herein by reference.

Industrial Applicability

The nonaqueous secondary battery comprising an electrode which employs the composite graphite particle of the invention has a high capacity and has improved initial charge/discharge characteristics and an improved charge/discharge efficiency. This battery can hence satisfy the properties required for recent applications such as portable telephones, power tools, and electric vehicles, and is useful industrially.

Description of the Reference Numerals

(1) Solid line: one particle extracted
(2) Broken line: shape obtained from the extracted particle by binarizing the extracted particle and the background, i.e., the portion other than the particle, and then repeatedly performing contraction processing on the particle to an area that is 70% of the area of the particle.

**Claims**

1. A composite graphite particle (C) for nonaqueous-secondary-battery negative electrode, the composite graphite particle (C) comprising a graphite (A) and a metallic particle (B) capable of alloying with Li, wherein
   when a section of the composite graphite particle (C) is examined with a scanning electron microscope, a folded structure of the graphite (A) is observed and a presence ratio of the metallic particle (B) in the composite graphite particle (C), as calculated by the following measuring method, is 0.2 or higher:
   (Measuring Method)
   a section of the composite graphite particles (C) is examined with a scanning electron microscope to select any one particle; an area (a) of metallic particle (B) present in the one particle is calculated; next, the one particle and the background other than the one particle, are binarized, and a contraction processing is then repeatedly performed on the one particle to extract a shape which has an area that is 70% of the area of the one particle; an area (b) of metallic particle (B)' present within the shape is calculated; a value obtained by dividing the area (b) by the area (a) is calculated; similarly, any two particles are further selected, and a value obtained by dividing area (b) by area (a) is calculated for each particle; these values for the three particles are averaged; and the resultant average value is taken as the presence ratio of the metallic particle (B) in the composite graphite particle (C).

2. The composite graphite particle (C) for nonaqueous-secondary-battery negative electrode according to claim 1, wherein the metallic particle (B) comprises at least one of Si and $SiO_x$ (0<x<2).

3. The composite graphite particle (C) for nonaqueous-secondary-battery negative electrode according to claim 1 or 2, which comprises the metallic particle (B) in an amount of 1% by mass or larger but less than 30% by mass.

4. The composite graphite particle (C) for nonaqueous-secondary-battery negative electrode according to any one of claims 1 to 3, which has a tap density of 0.7 $g/cm^3$ or higher.

5. An active material for nonaqueous-secondary-battery negative electrode, which comprises: the composite graphite particle (C) for nonaqueous-secondary-battery negative electrode according to any one of claims 1 to 4; and one or more members selected from the group consisting of natural graphites, artificial graphites, graphites coated with a carbonaceous substance, resin-coated graphites, and amorphous carbon.

6. A negative electrode for nonaqueous secondary battery, which comprises a current collector and a negative-electrode active material formed on the current collector, wherein the negative-electrode active material comprises the composite graphite particle (C) for nonaqueous-secondary-battery negative electrode according to any one of claims 1 to 4.

7. A negative electrode for nonaqueous secondary battery, which comprises a current collector and a negative-electrode active material formed on the current collector, wherein the negative-electrode active material comprises the active material for nonaqueous-secondary-battery negative electrode according to claim 5.

8. A nonaqueous secondary battery comprising: a positive electrode and negative electrode which are capable of occluding and releasing metal ions: and an electrolytic solution, wherein the negative electrode is the negative electrode for nonaqueous secondary battery according to claim 6 or 7.

[Fig. 1]

[Fig. 2]

[Fig. 3]

[Fig. 4]

[Fig. 5]

## INTERNATIONAL SEARCH REPORT

| International application No. |
|---|
| PCT/JP2013/075193 |

A. CLASSIFICATION OF SUBJECT MATTER
*H01M4/38*(2006.01)i, *H01M4/36*(2006.01)i, *H01M4/48*(2010.01)i, *H01M4/587*
(2010.01)i

According to International Patent Classification (IPC) or to both national classification and IPC

B. FIELDS SEARCHED

Minimum documentation searched (classification system followed by classification symbols)
H01M4/38, H01M4/36, H01M4/48, H01M4/587

Documentation searched other than minimum documentation to the extent that such documents are included in the fields searched
Jitsuyo Shinan Koho          1922-1996    Jitsuyo Shinan Toroku Koho    1996-2013
Kokai Jitsuyo Shinan Koho    1971-2013    Toroku Jitsuyo Shinan Koho    1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2009-181767 A  (Tokai Carbon Co., Ltd.), 13 August 2009 (13.08.2009), examples 1, 3; table 2 (Family: none) | 1-8 |
| X | JP 2007-227239 A  (Sanyo Electric Co., Ltd.), 06 September 2007 (06.09.2007), claims 1 to 3 (Family: none) | 1,3 |
| A |  | 2,4-8 |
| A | WO 2012/018035 A1  (Hitachi Maxell Energy, Ltd.), 09 February 2012 (09.02.2012), example 1 & US 2013/0136988 A1    & WO 2012/018035 A1 & CN 102893430 A | 1-8 |

| [×] | Further documents are listed in the continuation of Box C. | [ ] | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 22 October, 2013 (22.10.13) | 29 October, 2013 (29.10.13) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
|---|
| PCT/JP2013/075193 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2011-003551 A  (Mitsubishi Chemical Corp.), 06 January 2011 (06.01.2011), claims 1 to 2 & JP 2008-305777 A      & US 2009/0104530 A1 & EP 2006937 A2      & WO 2007/116971 A1 & KR 10-2008-0108222 A  & CN 102044672 A & CN 102044673 A | 1-8 |
| A | JP 2009-164140 A  (Mitsubishi Chemical Corp.), 23 July 2009 (23.07.2009), paragraph [0042] & JP 2008-270161 A      & JP 2009-289758 A & US 2011/0003200 A1    & EP 2110872 A1 & EP 2337125 A1      & EP 2341570 A1 & WO 2008/078695 A1    & KR 10-2009-0092268 A & CN 101536220 A      & CN 101997114 A & CN 101997115 A | 1-8 |
| A | JP 2008-235247 A  (JFE Chemical Corp.), 02 October 2008 (02.10.2008), claim 1 & WO 2008/102712 A1    & KR 10-2009-0086456 A & CN 101632187 A      & TW 200843166 A | 1-8 |
| A | JP 2011-233368 A  (Hitachi Maxell Energy, Ltd.), 17 November 2011 (17.11.2011), paragraphs [0030], [0040] to [0042] (Family: none) | 1-8 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003223892 A
- JP 2012043546 A
- JP 2012124116 A
- JP 2005243508 A
- JP 2008027897 A
- JP 2008186732 A
- JP 3952118 B
- JP 2012206107 A
- JP 2012206108 A
- JP 2013057196 A
- JP 2013149597 A

**Non-patent literature cited in the description**

- Funryutai Purosesu Gijutsu Shusei. Industrial Technology Center K.K, 1974
- HANDBOOK OF CARBON, GRAPHITE, DIAMOND AND FULLERENES. Noyes Publications
- *Materials Integration,* 2004, vol. 17 (1